(19) Europäisches Patentamt
European Patent Office
Office européen des brevets

(11) **EP 4 480 913 A1**

(12) **EUROPEAN PATENT APPLICATION**
published in accordance with Art. 153(4) EPC

(43) Date of publication:
25.12.2024 Bulletin 2024/52

(21) Application number: 23756676.5

(22) Date of filing: 17.02.2023

(51) International Patent Classification (IPC):
C01B 33/02 (2006.01)        C01B 33/113 (2006.01)
C01B 33/021 (2006.01)       C01B 32/182 (2017.01)
C01B 32/198 (2017.01)       C01B 32/158 (2017.01)
C01B 32/20 (2017.01)        H01M 4/133 (2010.01)
H01M 4/583 (2010.01)        H01M 10/052 (2010.01)

(52) Cooperative Patent Classification (CPC):
C01B 32/15; C01B 32/158; C01B 32/182;
C01B 32/198; C01B 32/20; C01B 33/02;
C01B 33/021; C01B 33/113; H01M 4/02;
H01M 4/133; H01M 4/36; H01M 4/38; H01M 4/583;
H01M 10/052; Y02E 60/10

(86) International application number:
PCT/KR2023/002332

(87) International publication number:
WO 2023/158264 (24.08.2023 Gazette 2023/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.02.2022 KR 20220021104

(71) Applicant: Daejoo Electronic Materials Co., Ltd.
Siheung-si, Gyeonggi-do 15094 (KR)

(72) Inventors:
• PARK, Jeong Gyu
Siheung-si, Gyeonggi-do 15094 (KR)
• LEE, Jung Hyun
Siheung-si, Gyeonggi-do 15094 (KR)
• LEE, Hyun Seok
Siheung-si, Gyeonggi-do 15094 (KR)
• LEE, Eorang
Siheung-si, Gyeonggi-do 15094 (KR)
• LIM, Jong Chan
Siheung-si, Gyeonggi-do 15094 (KR)

(74) Representative: HGF
HGF Limited
1 City Walk
Leeds LS11 9DX (GB)

(54) **SILICON-CARBON COMPOSITE, METHOD FOR MANUFACTURING SAME, AND ANODE ACTIVE MATERIAL AND LITHIUM SECONDARY BATTERY COMPRISING SAME**

(57) The present invention relates to a silicon-carbon composite, a method for manufacturing same, and an anode active material comprising same. The silicon-carbon composite is a silicon-carbon composite including silicon particles and carbon. As the molar ratio of oxygen (O) atoms to silicon (Si) atoms in the silicon-carbon composite satisfies 0.05 to 0.45, when the silicon-carbon composite is applied to an anode active material, the discharge capacity, initial efficiency, and capacity retention ratio after cycles of a lithium secondary battery can be simultaneously improved.

[Fig. 1]

## Description

### Technical Field

The present invention relates to a silicon-carbon composite, to a method for preparing the same, and to a negative electrode active material and a lithium secondary battery comprising the same.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well as the application thereof to large electronic devices such as automobiles and power storage systems, is being actively conducted.

Carbon materials are widely used as a negative electrode active material for such a lithium secondary battery. Silicon-based negative electrode active materials are being studied in order to further enhance the capacity of batteries. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction Scheme 1}] \qquad 22\text{Li} + 5\text{Si} = \text{Li}_{22}\text{Si}_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surfaces of the silicon particles are coated with a carbon layer using a chemical vapor deposition (CVD) method. In addition, Japanese Laid-open Patent Publication No. 2016-502253 discloses a negative electrode active material comprising silicon-based particles and carbon particles, wherein the carbon particles comprise fine carbon particles and coarse-grained carbon particles having different average particle diameters.

However, although these prior art documents relate to a negative electrode active material comprising silicon and carbon, there is a limit to suppressing the volume expansion and contraction during charging and discharging. Thus, there is still a demand for research to solve these problems.

[Prior art documents]

[Patent documents]

(Patent Document 1) Japanese Patent No. 4393610
(Patent Document 2) Japanese Laid-open Patent Publication No. 2016-502253

## Disclosure of Invention

### Technical Problem

The present invention is devised to solve the above problems of the prior art. An object thereof is to provide a silicon-carbon composite comprising silicon particles and carbon and having a molar ratio (O/Si) of oxygen (O) atoms to silicon (Si) atoms in the silicon-carbon composite that satisfies a specific range, thereby having excellent capacity retention rate when it is applied to a negative electrode active material, along with significantly improved discharge capacity and initial efficiency.

In addition, another object of the present invention is to provide silicon-carbon composites of various structures having a core-shell structure.

In addition, another object of the present invention is to provide a method for preparing the silicon-carbon composite.

In addition, another object of the present invention is to provide a negative electrode active material comprising the silicon-carbon composite and a lithium secondary battery comprising the same.

**Solution to Problem**

To accomplish the above objects, the present invention provides a silicon-carbon composite that comprises silicon particles and carbon, wherein the molar ratio (O/Si) of oxygen (O) atoms to silicon (Si) atoms in the silicon-carbon composite is 0.01 to 0.45.

In addition, the present invention provides a method for preparing the silicon-carbon composite that comprises a first step of etching a silicon-based raw material powder using an etching solution containing a fluorine (F) atom-containing compound; a second step of filtering and drying the product obtained by the etching to prepare a silicon composite; and a third step of coating carbon inside the silicon composite, or coating carbon inside the silicon composite and forming a carbon layer on the surface thereof, using a chemical thermal decomposition deposition method to obtain a silicon-carbon composite.

In addition, the present invention provides a negative electrode active material comprising the silicon-carbon composite.

Further, the present invention provides a lithium secondary battery comprising the negative electrode active material.

**Advantageous Effects of Invention**

According to an embodiment, as the silicon-carbon composite comprises silicon particles and carbon and has a molar ratio (O/Si) of oxygen (O) atoms to silicon (Si) atoms in the silicon-carbon composite, which satisfies a specific range, when it is used as a negative electrode active material of a lithium secondary battery along with a binder and a conductive material to prepare a negative electrode active material composition, it is readily dispersed, mechanical properties such as strength are excellent, and the performance of a lithium secondary battery can be enhanced. Further, when the porosity of the silicon-carbon composite is controlled, the discharge capacity, initial efficiency, and capacity retention rate of a lithium secondary battery can be further enhanced.

According to another embodiment, the silicon-carbon composite has a core-shell structure, and the core comprises silicon particles and carbon, and, in particular, the shell comprises at least one or two or more carbon layers, whereby the strength of the shell layer is further increased, and the bonding (adhesion) between the silicon-carbon composite and a binder is increased, which can reduce the electrode expansion ratio. As a result, it is possible to enhance the discharge capacity, initial efficiency, and capacity retention rate of a lithium secondary battery at the same time.

In addition, the preparation method according to an embodiment has an advantage in that mass production is possible through a continuous process with minimized steps.

**Brief Description of Drawings**

The following drawings attached to the present specification illustrate preferred embodiments of the present invention and serve to further understand the technical idea of the present invention together with the description of the present invention. Accordingly, the present invention should not be construed as being limited only to those depicted in the drawings.

Fig. 1 is a schematic diagram illustrating the preparation process of a silicon-carbon composite according to an embodiment.

Fig. 2 shows photographs of the silicon composite (B1) prepared in Example 1 in a magnification of 30,000 as analyzed by an ion beam scanning electron microscope (FIB-SEM).

Fig. 3 shows photographs of the silicon-carbon composite prepared in Example 1 in a magnification of 30,000 as analyzed by an ion beam scanning electron microscope (FIB-SEM).

Fig. 4 shows an ion beam transmission electron microscope (TEM-FIB) photograph of the silicon-carbon composite prepared in Example 1.

Fig. 5 shows the measurement results of an X-ray diffraction analysis of the silicon-carbon composite prepared in Example 1.

Fig. 6 shows the measurement results of a Raman spectroscopy of the silicon-carbon composite prepared in Example 1.

Fig. 7 shows the measurement results of an X-ray diffraction analysis of the silicon-carbon composite prepared in Example 4.

## Best Mode for Carrying out the Invention

The present invention is not limited to what is disclosed below. Rather, it may be modified in various forms as long as the gist of the invention is not altered.

In the drawings attached to the present specification, some components are exaggerated, omitted, or schematically depicted. The size of each component does not entirely reflect the actual size.

The same reference numerals refer to the same elements throughout the present specification.

The terms used in the present specification are for the purpose of describing particular embodiments only and are not intended to limit the present invention. Singular expressions cover plural expressions unless the context clearly indicates otherwise.

In this specification, when one component is described as being formed on or under another component, it means that one component is formed directly on or under the other component, or indirectly through another component.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

### [Silicon-carbon composite]

The silicon-carbon composite according to an embodiment comprises silicon particles and carbon, wherein the molar ratio (O/Si) of oxygen (O) atoms to silicon (Si) atoms in the silicon-carbon composite is 0.01 to 0.45.

As the silicon-carbon composite according to an embodiment comprises silicon particles and carbon, it is possible to secure adequate electrical conductivity of the silicon-carbon composite and to adjust the specific surface area appropriately. Thus, when it is used as a negative electrode active material of a lithium secondary battery, the performance of the lithium secondary battery can be further enhanced. Further, the molar ratio (O/Si) of oxygen (O) atoms to silicon (Si) atoms in the silicon-carbon composite satisfies a specific range, whereby it is possible to significantly enhance discharge capacity and initial efficiency while an excellent capacity retention rate is maintained.

Specifically, according to an embodiment, it is possible to remove most of the silicon dioxide contained in the silicon-carbon composite by etching. In such a case, the surface of the silicon particle may comprise silicon (Si) atoms in a very high fraction as compared with oxygen (O) atoms. That is, the molar ratio O/Si may be significantly reduced. As the silicon-carbon composite is used as a negative electrode active material, a lithium secondary battery having excellent discharge capacity can be preferably obtained while the initial efficiency of the lithium secondary battery can be enhanced.

The molar ratio (O/Si) of oxygen (O) atoms to silicon (Si) atoms in the silicon-carbon composite may be 0.01 to 0.45, preferably, 0.06 to 0.45, more preferably, 0.05 to 0.35, most preferably, 0.06 to 0.25.

When the molar ratio (O/Si) of oxygen (O) atoms to silicon (Si) atoms in the silicon-carbon composite is equal to, or greater than, the lower limit of the above range, expansion and contraction due to the charging and discharging of a lithium secondary battery can be suppressed. Thus, when the silicon-carbon composite is used as a negative electrode active material, it is possible to suppress the delamination of the negative electrode active material from the negative electrode current collector. In addition, if the molar ratio (O/Si) of oxygen (O) atoms to silicon (Si) atoms is equal to, or lower than, the upper limit of the above range, sufficient discharge capacity can be secured, so that it is possible to maintain high charge and discharge characteristics.

Hereinafter, the structure of the silicon-carbon composite according to an embodiment will be described in detail.

### Structure of the silicon-carbon composite

The silicon-carbon composite according to an embodiment comprises silicon particles and carbon.

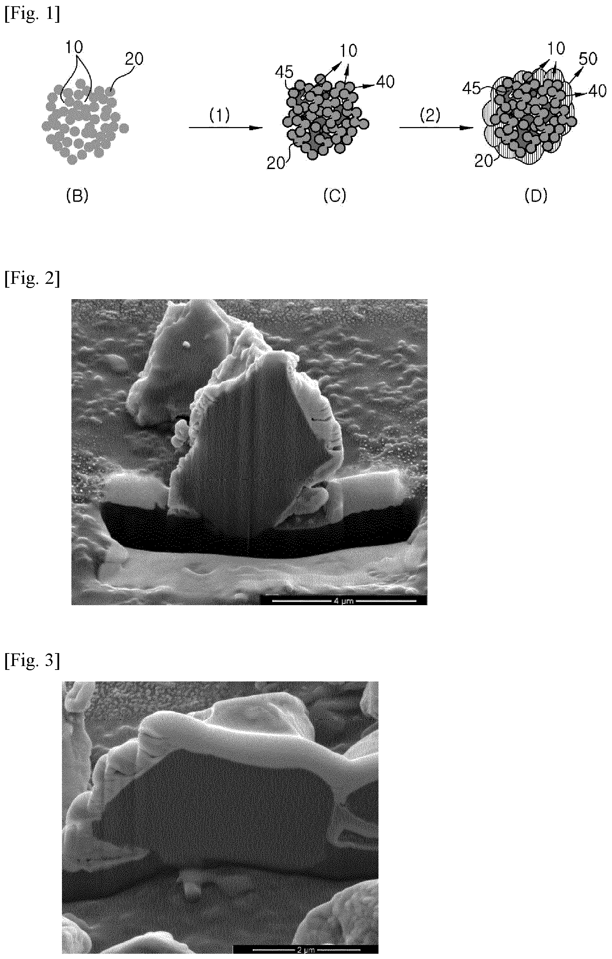

Fig. 1 is a schematic diagram illustrating the preparation process of a silicon-carbon composite according to an embodiment. Figs. 1(C) and 1(D) show a schematic diagram that simplifies the cross-section of the structure of silicon-carbon composites according to various embodiments of the present invention. Fig. 1(B) and its preparation process are described in detail in the preparation method of a silicon-carbon composite described below.

First, referring to Figs. 1(C) and 1(D), the silicon-carbon composite comprises silicon particles (20) and carbon (45).

The silicon-carbon composite may comprise silicon particles (20), specifically, a silicon aggregate in which the silicon particles (20) are combined with (or interconnected to) each other. A carbon layer (40) may be formed on the surface of the silicon particles and/or the silicon aggregate, and carbon (45) may be formed as it is uniformly dispersed and/or distributed between the silicon particles (20).

In the present specification, the term "combined with (or interconnected)" refers to a state in which silicon particles in the silicon-carbon composite are combined (fused) with at least another silicon particle and connected to each other, or a structure in which the silicon particles are continuously connected (silicon aggregate).

The inside of the silicon-carbon composite may be more firmly combined by the carbon (45) and the carbon layer (40). As a result, it is possible to minimize the pulverization of the silicon-carbon composite that may be caused by a change in volume during the charging and discharging of a lithium secondary battery.

The silicon-carbon composite is a composite in which silicon aggregates, in which a plurality of silicon particles (20) are combined with each other, are uniformly distributed in a composite whose structure is in the form of a single mass, for example, a polyhedral, spherical, or similar shape. It may be in a single composite in which carbon (45) and a carbon layer (40) comprising carbon surround a part or all of the surfaces of one or more silicon particles or the surfaces of secondary silicon particles (silicon aggregates) formed by the aggregation of two or more silicon particles.

That is, in the silicon-carbon composite, a large amount of carbon (45) is formed inside thereof and a carbon layer (40) comprising carbon is uniformly formed in a state to surround the silicon particles (20); thus, there are advantages in that it is possible to ensure high conductivity and that the addition of a carbon-based negative electrode active material can be reduced when a negative electrode is manufactured. In addition, the specific surface area of the silicon-carbon composite is appropriately adjusted such that the performance of a lithium secondary battery can be further enhanced.

In addition, the silicon-carbon composite may comprise pores (10).

When the silicon-carbon composite comprises pores (10), the volume expansion of silicon particles (20) that may occur during the charging and discharging of a lithium secondary battery can be accommodated through the pores, thereby effectively alleviating and suppressing the problems caused by the volume expansion.

Meanwhile, according to an embodiment, the silicon-carbon composite may have a core-shell structure.

Specifically, the silicon-carbon composite may have a core-shell structure, wherein the core may comprise silicon particles and carbon, and the shell may comprise a carbon layer.

The silicon-carbon composite according to an embodiment that comprises a core-shell structure may comprise a shell comprising a carbon layer (carbon film) on the surface of the core.

In the silicon-carbon composite, the carbon layer that forms the shell may be formed or laminated in various ways as long as the desired effect is not impaired. The shell may comprise up to four layers, specifically, one to four layers, preferably, one to three layers, for example, one or two layers of carbon.

For example, according to an embodiment, there may be provided a silicon-carbon composite (hereinafter referred to as "silicon-carbon composite (1)") having a core-shell structure wherein the shell has a single-layer structure composed of a first carbon layer.

Specifically, referring back to Fig. 1(C), the silicon-carbon composite (1) may have a core-shell structure, wherein the core may comprise silicon particles (20) and carbon (45), and the shell may comprise a first carbon layer (40). In addition, the silicon-carbon composite (1) may comprise pores (10) therein.

As the silicon-carbon composite (1) comprises a carbon layer having a single-layer structure on the surface of the core, the strength may be fortified, excellent electrical conductivity may be secured even after the electrode expands during charging and discharging, and side reactions with the electrolyte are suppressed, so that it is possible to enhance the charge and discharge capacity, initial charge and discharge efficiency, and capacity retention rate of a secondary battery.

According to another embodiment, there may be provided a silicon-carbon composite (hereinafter referred to as "silicon-carbon composite (2)") having a core-shell structure wherein the shell has a multilayer structure comprising at least two carbon layers comprising a first carbon layer and a second carbon layer.

That is, the shell may have a multilayer structure comprising at least two carbon layers comprising a first carbon layer and a second carbon layer.

Specifically, referring back to Fig. 1(D), the silicon-carbon composite (2) may have a core-shell structure, wherein the core may comprise silicon particles (20) and carbon (45), and the shell may comprise a first carbon layer (40) and a second carbon layer (50) formed on the first carbon layer (40). In addition, the silicon-carbon composite (2) may comprise pores (10) therein.

When the shell is composed of at least two carbon layers, even if cracks are formed on the surface of one of the carbon layers, it is possible to maintain the state in which the carbon layers are electrically connected until the other carbon layer without cracks is completely detached.

The first carbon layer may be present on the surface of the core. In addition, the first carbon layer may be present on the surface of the silicon particles and/or the silicon aggregates.

In addition, the shell has a structure that surrounds the core, wherein at least one carbon layer adopted therein, that is, the first carbon layer, or at least two carbon layers comprising the first carbon layer and the second carbon layer, may produce an effect as a buffer layer (cushioning layer).

The buffer layer is effective as a mechanical buffer support surrounding the core. More specifically, the buffer layer may suppress the deterioration, cracking, and volume expansion of the core caused by the mechanical expansion of silicon during charging and discharging.

The specific characteristics of the silicon-carbon composites (1) and (2) are described in more detail in the various examples of the silicon-carbon composite described below.

**Physical properties of the silicon-carbon composite**

The silicon-carbon composite may have an average particle diameter ($D_{50}$) of 2 $\mu$m to 15 $\mu$m.

In addition, the average particle diameter ($D_{50}$) of the silicon-carbon composite is a value measured as a diameter-averaged particle diameter ($D_{50}$), i.e., a particle size or median diameter when the cumulative volume is 50% in particle size distribution measurement according to a laser beam diffraction method. If the average particle diameter ($D_{50}$) of the silicon-carbon composite is less than the above range, there may be a concern that the dispersibility may be deteriorated due to the aggregation of the silicon-carbon composite particles during the preparation of a negative electrode slurry (i.e., a negative electrode active material composition) using the same. On the other hand, if the average particle diameter ($D_{50}$) of the silicon-carbon composite exceeds the above range, the expansion of the silicon-carbon composite particles due to the charging of lithium ions becomes severe, and the binding capability between the silicon-carbon composite particles and the binding capability between the particles and the current collector are deteriorated as charging and discharging are repeated, so that the lifespan characteristics may be significantly reduced. In addition, there is a concern that the activity may be deteriorated due to a decrease in the specific surface area.

Specifically, the average particle diameter ($D_{50}$) of the silicon-carbon composite may be preferably 3 $\mu$m to 10 $\mu$m, more preferably 3 $\mu$m to 8 $\mu$m. More specifically, in view of the remarkable improvement effect of the optimization of the average particle diameter ($D_{50}$) of the silicon-carbon composite, the average particle diameter ($D_{50}$) of the silicon-carbon composite particles may be 3 $\mu$m to 6 $\mu$m.

The silicon-carbon composite may have a core-shell structure, and the core may have an average particle diameter of 2 $\mu$m to 10 $\mu$m, preferably, 2 $\mu$m to 8 $\mu$m, more preferably, 2 $\mu$m to 6 $\mu$m.

The silicon-carbon composite may have a specific surface area (Brunauer-Emmett-Teller method; BET) of 2 $m^2$/g to 50 $m^2$/g, preferably, 2 $m^2$/g to 40 $m^2$/g, more preferably, 2 $m^2$/g to 20 $m^2$/g. If the specific surface area of the silicon-carbon composite is less than the above range, the charge and discharge characteristics of a lithium secondary battery may be deteriorated. If it exceeds the above range, it may be difficult to prepare a negative electrode active slurry suitable for the application to a negative electrode current collector of a lithium secondary battery, the contact area with an electrolyte increases, and the decomposition reaction of the electrolyte may be accelerated, or a side reaction of a lithium secondary battery may be caused.

In addition, the silicon-carbon composite may have a density of 1.8 g/cm$^3$ to 2.5 g/cm$^3$, preferably, 2.0 g/cm$^3$ to 2.5 g/cm$^3$, more preferably, 2.0 g/cm$^3$ to 2.4 g/cm$^3$. The density may vary depending on the amount of coverage of the carbon layer, and the strength of the matrix of a negative electrode active material may be enhanced, thereby enhancing the initial efficiency or cycle life characteristics. In such an event, the density may refer to true density.

When the density of the silicon-carbon composite is equal to, or greater than, the lower limit of the above range, cracks in the negative electrode active material powder due to the volume expansion and contraction of the negative electrode active material powder during charging and discharging may be minimized, whereby the cycle deterioration may be suppressed. When the density is equal to, or less than, the upper limit of the above range, the impregnability of an electrolyte is enhanced, which enhances initial charge and discharge capacity.

When the silicon-carbon composite is used as a negative electrode active material in an electrode (negative electrode), the electrode expansion rate may be 55% to 150%, preferably, 55% to 100%, more preferably, 60% to 80%, based on the thickness of the electrode after one cycle of charge and discharge.

The electrode expansion rate may be a value converted into a percentage of the ratio of the thickness (N1) of a press-rolled negative electrode before electrode manufacture and the thickness (N2) of the negative electrode when the cycle lifespan is measured during the secondary battery evaluation using a secondary battery manufactured using the negative electrode and the measurement is terminated at 80% of the cycle life.

[Equation A]

Electrode expansion rate (%) = thickness (N2) of a negative electrode when the measurement is terminated at 80% of the cycle life / thickness of a press-rolled negative electrode before electrode manufacture (N1) $\times$ 100

In the silicon-carbon composite, the silicon-carbon composite (1) having a single-layer structure in which the shell is composed of a first carbon layer, and the silicon-carbon composite (2) having a multilayer structure in which the shell comprises at least two carbon layers comprising a first carbon layer and a second carbon layer, may also have the same or similar properties.

Hereinafter, each component of the silicon-carbon composite will be described in detail.

**Silicon particles**

The silicon-carbon composite according to an embodiment comprises silicon particles.

In addition, the silicon-carbon composite may comprise a silicon aggregate in which silicon particles are combined with each other. Specifically, the silicon-carbon composite may comprise a silicon aggregate having a three-dimensional (3D) structure in which two or more of the silicon particles are combined with each other.

Since the silicon particles charge lithium, the capacity of a lithium secondary battery may decrease if silicon particles are not employed. The silicon particles may be crystalline or amorphous and specifically may be amorphous or in a similar phase thereto.

If the silicon particles are crystalline, a dense composite may be obtained as the size of the crystallites is small, which fortifies the strength of the matrix to prevent cracks. Thus, the initial efficiency or cycle lifespan characteristics of a lithium secondary battery can be further enhanced. In addition, if the silicon particles are amorphous or in a similar phase thereto, the expansion or contraction during the charging and discharging of a lithium secondary battery is small, and battery performance such as capacity characteristics can be further enhanced.

Although the silicon particles have high initial efficiency and battery capacity, there is a very complex crystal change by electrochemically absorbing, storing, and releasing lithium atoms.

The silicon particles may be uniformly distributed inside the silicon-carbon composite. In such a case, excellent mechanical properties such as strength may be achieved.

In addition, the silicon-carbon composite may have a structure in which silicon particles and carbon are uniformly dispersed.

In addition, it is preferable that silicon particles and/or silicon aggregates in which silicon particles are combined with each other in the silicon-carbon composite are uniformly distributed inside the silicon-carbon composite.

In addition, the silicon aggregates as an active material may be uniformly distributed inside the silicon-carbon composite, and silicon particles that are not combined with each other may be contained. The silicon particles and/or silicon aggregates may be uniformly distributed inside the silicon-carbon composite. In such a case, excellent electrochemical properties such as charge and discharge may be achieved.

The silicon particles contained in the silicon-carbon composite according to an embodiment may be in an amorphous form, a crystalline form having a crystallite size of 2 nm to 10 nm, or a mixture thereof.

Specifically, when the silicon-carbon composite is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the silicon particles may have a crystallite size of 2 nm to 10 nm, preferably, 2 nm to 8 nm, more preferably, 2 nm to 5 nm.

If the silicon particles comprise a crystalline form, and if the crystallite size of the silicon particles is less than 2 nm, it is not easy to prepare them, and the yield after etching may be low. In addition, if the crystallite size of the silicon particles exceeds the above range, the micropores cannot adequately suppress the volume expansion of the silicon particles that occur during charging and discharging, a region that does not contribute to discharging is present, and a reduction in the Coulombic efficiency that stands for the ratio of charge capacity to discharge capacity cannot be suppressed.

The content of silicon (Si) in the silicon-carbon composite may be 38% by weight to 80% by weight, preferably, 40% by weight to 80% by weight, more preferably, 50% by weight to 80% by weight, even more preferably, 50% by weight to 70% by weight, based on the total weight of the silicon-carbon composite.

If the content of silicon (Si) is less than the above range, the amount of an active material for the occlusion and release of lithium is small, which may reduce the charge and discharge capacity of a lithium secondary battery. On the other hand, if it exceeds the above range, the charging and discharge capacity of a lithium secondary battery may be increased, whereas the expansion and contraction of the electrode during charging and discharging may be excessively increased, and the negative electrode active material powder may be further pulverized, which may deteriorate the cycle characteristics.

**Silicon oxide compound**

According to an embodiment, the silicon-carbon composite may further comprise a silicon oxide compound.

In the present invention, the silicon oxide compound is a generic term for an amorphous silicon compound obtained by cooling and precipitation of silicon monoxide formed by the oxidation of metal silicon, the reduction of silicon dioxide, or heating a mixture of silicon dioxide and metal silicon. It may be represented by the formula $SiO_x$. In the above formula, x may be $0.4 \leq x \leq 2$, preferably, $0.4 \leq x < 1.5$, more preferably, $0.4 \leq x < 1.2$.

In addition, when a lower silicon oxide powder, that is, powder of $SiO_x$ where x is $0.4 \leq x \leq 1.2$ is used, lithium silicate can be uniformly formed in the silicon-carbon composite, thereby alleviating volume expansion. As a result, it is possible to enhance the cycle characteristics of a lithium secondary battery.

In the formula $SiO_x$, if the value of x is less than the above range, expansion and contraction may be increased and lifespan characteristics may be deteriorated during the charging and discharging of a lithium secondary battery. In addition, if x exceeds the above range, there may be a problem in that the initial efficiency of a lithium secondary battery is decreased as the amount of inactive oxides increases.

In addition, the silicon-carbon composite may further comprise a silicon oxide ($SiO_x$, $0.4 \leq x \leq 2$) formed on the surface of the silicon particles and/or silicon aggregates.

Meanwhile, the content of oxygen (O) in the silicon-carbon composite may be 0.5% by weight to 10% by weight, preferably, 0.5% by weight to 8% by weight, more preferably, 0.5% by weight to 6% by weight, based on the total weight of the silicon-carbon composite. If the content of oxygen (O) in the silicon-carbon composite is less than the above range, the degree of expansion may be increased during the charging of a lithium secondary battery. If the content of oxygen (O) in the silicon-carbon composite exceeds the above range, an irreversible reaction with lithium increases, which may deteriorate the initial charge and discharge efficiency of a lithium secondary battery, the negative electrode active material may be readily delaminated from the negative electrode current collector, and the charge and discharge cycle may be deteriorated.

Meanwhile, in general, as the ratio of oxygen decreases in a negative electrode active material that comprises silicon, the ratio of silicon particles as an active material increases, thereby increasing discharge capacity and discharge efficiency, whereas there may arise a problem in that cracks may be formed in the silicon-carbon composite by the volume expansion caused by the charging and discharging of silicon particles. As a result, the cycle characteristics of a lithium secondary battery may be deteriorated. In order to solve this problem, silicon dioxide as an inert material or an inert phase may be contained in the silicon-carbon composite.

Specifically, since the silicon dioxide is an inert material or an inert phase, it is effective in mitigating the volume expansion caused by the charging and discharging of silicon particles. The silicon dioxide is a component for forming a matrix in the silicon-carbon composite, which increases the mechanical strength of the matrix of the silicon-carbon composite to make it more robust and is effective in suppressing the formation of cracks even during volume expansion.

Further, as the content of the silicon dioxide is optimized, it is possible to suppress a decrease in the initial capacity and initial efficiency of a lithium secondary battery and to enhance the cycle characteristics by increasing the strength of the matrix.

Specifically, according to an embodiment, the silicon-carbon composite may comprise the silicon dioxide in an amount of 0.3% to 6% by weight, preferably, 0.3% by weight to 5% by weight, more preferably, 0.5% by weight to 5% by weight, most preferably, 1% by weight to 4% by weight, based on the total weight of the silicon-carbon composite. If the content of the silicon dioxide is less than the above range, the effect of enhancing the cycle characteristics of a lithium secondary battery may be insignificant. If it exceeds the above range, it may be difficult to achieve the desired molar ratio (O/Si) of oxygen (O) atoms to silicon (Si) atoms in the silicon-carbon composite, and the cycle characteristics or discharge capacity of a lithium secondary battery may be deteriorated.

**Carbon**

The silicon-carbon composite according to an embodiment comprises carbon.

According to an embodiment, as the silicon-carbon composite comprises carbon, it is possible to secure adequate electrical conductivity of the silicon-carbon composite and to adjust the specific surface area appropriately. Thus, when it is used as a negative electrode active material of a lithium secondary battery, the lifespan characteristics and capacity of the lithium secondary battery can be enhanced.

In general, the electrical conductivity of a negative electrode active material is an important factor for facilitating electron transfer during an electrochemical reaction. If the composite as a negative electrode active material does not comprise carbon, the electrical conductivity may not reach an appropriate level.

In the silicon-carbon composite, the carbon may be present on the surface of the silicon particles contained in the silicon-carbon composite. In addition, the carbon may be present on the surface, or inside, of the silicon aggregates contained in the silicon-carbon composite.

In addition, the carbon may serve as a matrix, and the silicon particles and the pores may be dispersed in the composite matrix.

Specifically, the silicon-carbon composite may have a sea-island structure in which the silicon particles or closed pores (v) form islands and carbon forms a sea. The pores may be open pores and closed pores. The closed pores may comprise pores whose inside is not coated with carbon.

The state in which the silicon particles or carbon are uniformly dispersed is confirmed through image observation of a dark field image or a bright field image by a transmission electron microscope (TEM).

According to an embodiment, the silicon-carbon composite comprises a silicon composite and a carbon layer on its surface. Specifically, the silicon-carbon composite comprises a silicon composite comprising silicon particles, and it may comprise a carbon layer comprising carbon on the surface thereof.

In particular, as the silicon-carbon composite comprises a carbon layer, it is possible to enhance the electrical contact between particles and to provide excellent electrical conductivity even after the electrode has been expanded during charging and discharging, so that the performance of a lithium secondary battery can be further enhanced.

In addition, according to an embodiment, the thickness of the carbon layer or the amount of carbon may be controlled, so that it is possible to achieve appropriate electrical conductivity, as well as to prevent a deterioration of the lifespan characteristics, to thereby achieve a negative electrode active material of high capacity.

The content of carbon (C) may be 18% by weight to 60% by weight based on the total weight of the silicon-carbon composite. Specifically, the content of carbon (C) may preferably be 20% by weight to 55% by weight, 20% by weight to 50% by weight, or 25% by weight to 45% by weight, based on the total weight of the silicon-carbon composite.

Specifically, when the silicon-carbon composite has a core-shell structure, the content of the carbon (C) may be the sum of the content of carbon (C) in the core and the amount of carbon (C) in the carbon layer contained in the shell.

If the content of carbon (C) is less than the above range, a sufficient effect of enhancing conductivity cannot be expected, and there is a concern that the electrode lifespan of a lithium secondary battery may be deteriorated. In addition, if the content of carbon (C) exceeds the above range, the discharge capacity of a lithium secondary battery may decrease, and the bulk density may decrease, so that the charge and discharge capacity per unit volume may be deteriorated.

In addition, the silicon-carbon composite comprises carbon inside the core, and the content of carbon (C) inside the core of the silicon-carbon composite may be 16% by weight to 45% by weight, preferably, 18% by weight to 40% by weight, more preferably, 20% by weight to 40% by weight, based on the total weight of the silicon-carbon composite.

When the content of carbon (C) inside the core of the silicon-carbon composite satisfies the above range, sufficient electrical conductivity can be obtained, thereby further enhancing conductivity. As a result, a secondary battery with excellent charge and discharge capacity and cycle characteristics can be obtained.

In addition, the amount of carbon (C) in the carbon layer contained in the shell may be 2% by weight to 10% by weight, preferably, 2% by weight to 8% by weight, more preferably, 3% by weight to 6% by weight, based on the total weight of the silicon-carbon composite.

According to an embodiment, the carbon in the core may comprise at least one selected from the group consisting of amorphous carbon, crystalline carbon, carbon nanofibers, chemical vapor graphene, reduced graphene oxide, and carbon nanotubes, for example, amorphous carbon. In such a case, the interfacial resistance between the silicon particles and the carbon layer on the surface of the core is reduced, and the intercalation and detachment of lithium are smoothly achieved, thereby securing the high output characteristics of a lithium secondary battery.

In addition, the amorphous carbon inside the core can serve as a support for fixing silicon particles, suppress volume changes of the silicon particles during charge and discharge, and effectively block the contact between the silicon particles and the electrolyte.

In addition, the shell may comprise a carbon layer (first carbon layer) comprising at least one selected from the group consisting of amorphous carbon, crystalline carbon, carbon nanofibers, chemical vapor graphene, reduced graphene oxide, and carbon nanotubes.

Meanwhile, the thickness of the carbon layer may be 2 nm to 100 nm, preferably, 2 nm to 80 nm, more preferably, 3 nm to 50 nm. When the thickness of the carbon layer is equal to, or greater than, the lower limit of the above range, an enhancement in conductivity may be achieved. When it is equal to, or less than, the upper limit of the above range, a decrease in the capacity of a lithium secondary battery may be suppressed.

The average thickness of the carbon layer may be measured, for example, by the following procedure.

First, a negative electrode active material is observed at an arbitrary magnification by a transmission electron microscope (TEM).

The magnification is preferably, for example, a degree that can be confirmed with the naked eye. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

**Pores**

The silicon-carbon composite may comprise pores on its surface, inside, or both.

When the silicon-carbon composite comprises pores, the volume expansion of silicon particles that may occur during the charging and discharging of a secondary battery can be accommodated through the pores, thereby effectively alleviating and suppressing a problem caused by the volume expansion.

In the present specification, pores may be used interchangeably with voids. In addition, the pores may comprise inner pores (also referred to as closed pores) and/or internal pores.

The inner pore refers to an independent pore that is not connected to other pores because the entire wall of the pore is closed to form a closed structure.

The internal pores comprise inner pores and open pores. At least a part of the wall of a pore may be open to form an open structure, so that it may be connected to other pores, or it may not be so. In addition, they may refer to pores exposed to the outside as they are disposed on the surface of the silicon-carbon composite.

Meanwhile, the silicon-carbon composite comprises pores inside thereof, and the porosity of the silicon-carbon composite may be 10% or less. In such an event, the porosity may refer to internal porosity. Specifically, the porosity may be 10% or less, specifically, 0.01% to 10%, preferably, 0.01% to 8%, more preferably, 0.1% to 8%, most preferably, 0.5% to 5%.

If the porosity of the silicon-carbon composite exceeds the above range, the mechanical strength is reduced due to a large number of pores present in the negative electrode active material, and there is a concern that the negative electrode active material may be collapsed in the process of manufacturing a lithium secondary battery, for example, during the mixing of the negative electrode active material slurry and the press-rolling step after coating. Meanwhile, if the porosity of the silicon-carbon composite is less than the above range, the manufacture of the silicon-carbon composite may be difficult.

When the porosity of the silicon-carbon composite satisfies the above range, it is possible to obtain a buffering effect of volume expansion while maintaining sufficient mechanical strength. Thus, it is possible to minimize the problem of volume expansion due to the use of silicon particles and to enhance the achievement of high capacity and lifespan characteristics of a lithium secondary battery.

In addition, the volume expansion that takes place during the charging and discharging of a lithium secondary battery can be concentrated on the pores rather than the outer part of the negative electrode active material, thereby effectively controlling the volume expansion and enhancing the lifespan characteristics of a lithium secondary battery. In addition, an electrolyte can easily penetrate into the inside of the silicon-carbon composite to enhance the charge and discharge characteristics, so that the performance of a lithium secondary battery can be further enhanced.

The internal pores comprise open pores on the surface of the silicon-carbon composite and inner pores.

The porosity of the silicon-carbon composite may be defined as in the following Relationship 1. The porosity may refer to internal porosity.

Porosity (%) = pore volume per unit mass/(specific volume + pore volume per unit mass)      [Relationship 1]

The measurement of the porosity is not particularly limited. Based on an embodiment, for example, it may be measured with BELSORP (BET equipment) of BEL JAPAN using an adsorption gas such as nitrogen or by a mercury permeation method (Hg porosimeter).

However, it may be difficult in the present invention to measure an accurate value using a nitrogen adsorption method or a mercury permeation method. This may be a case where the surface of the composite is closed by a carbon coating, so that nitrogen gas does not reach the inner pores. In such a case, the porosity, that is, internal porosity, may be obtained by the sum of a value obtained by adsorption gas (BET) such as nitrogen or a mercury permeation method and the inner porosity of the following Relationship 2.

[Relationship 2]

$$\text{Inner porosity (\%)} = \{1 - (\text{measured density} / \text{calculated density})\} \times 100$$

In Relationship 2, the measured density may be measured using helium.

In the silicon-carbon composite, when the inner pores are closed and nitrogen gas or mercury does not reach the inner pores, the porosity measured by the nitrogen adsorption method may be considered to be close to open porosity.

According to an embodiment, most of the pores formed after etching may be present in small amounts or almost absent after the formation of a carbon layer (after carbon coating).

Specifically, in the method for preparing a silicon-carbon composite described below, when a carbon layer is formed, the pores present inside the composite, or inside and on the surface thereof, can be largely filled with carbon. As a result, the silicon-carbon composite may comprise only a small amount of pores.

In addition, the amount of pores, for example, porosity, of the silicon-carbon composite can be controlled by adjusting the etching conditions, such as the etching solution, its concentration, and etching time, in the method for preparing the silicon-carbon composite described below, and by changing the type of gas and the coating temperature during carbon coating to control the coating amount of carbon. The silicon-carbon composite may comprise only a small amount of pores or almost no pores inside thereof by the above adjustment.

Meanwhile, the silicon-carbon composite may have an inner porosity of 0.01% to 8%, preferably, 0.1% to 6%, more preferably, 0.5% to 5%. The inner porosity may be calculated by the above Relationship 2.

When the internal porosity and the inner porosity of the silicon-carbon composite each satisfy the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles and to optimally enhance the achievement of high capacity and lifespan characteristics.

The silicon-carbon composite may have various structures.

Specifically, the silicon-carbon composite has a core-shell structure, while it comprises a silicon-carbon composite (1) having a single-layer structure in which the shell is composed of a first carbon layer, a silicon-carbon composite (2) having a multilayer structure in which the shell comprises at least two carbon layers comprising a first carbon layer and a second carbon layer, and a combination thereof.

Hereinafter, the characteristics of the silicon-carbon composite (1) and the silicon-carbon composite (2) are specifically described.

**Silicon-carbon composite (1)**

The silicon-carbon composite (1) according to an embodiment may be a silicon-carbon composite having a core-shell structure wherein the shell has a single-layer structure composed of a first carbon layer.

The structure of the core of the silicon-carbon composite (1), each component, and its characteristics are as described above.

The first carbon layer may comprise at least one selected from the group consisting of amorphous carbon, crystalline carbon, carbon nanofibers, chemical vapor graphene, reduced graphene oxide, and carbon nanotubes.

Specifically, the first carbon layer may use the same components as the type and properties of the first carbon layer of the silicon-carbon composite (2) described below.

The first carbon layer may be present on the surface of the core. In addition, the first carbon layer may be present on the surface of the silicon particles and/or the silicon aggregates.

In addition, the shell is a structure surrounding the core, and the first carbon layer contained therein can suppress the expansion of the core and growth of silicon particles (silicon crystals) in the core and further enhance conductivity.

The content of carbon (C) in the silicon-carbon composite (1) may be 18% by weight to 60% by weight, 20% by weight to 55% by weight, 20% by weight to 50% by weight, or 25% by weight to 45% by weight, based on the total weight of the silicon-carbon composite (1). If the content of carbon (C) is less than the above range, a sufficient effect of enhancing conductivity cannot be expected, and there is a concern that the electrode lifespan of a lithium secondary battery may be deteriorated. In addition, if the content of carbon (C) exceeds the above range, the discharge capacity of a lithium secondary battery may decrease, and the bulk density may decrease, so that the charge and discharge capacity per unit volume may be deteriorated.

In addition, the amount of carbon (C) in the first carbon layer in the shell may be 2% by weight to 10% by weight, preferably, 2% by weight to 8% by weight, more preferably, 3% by weight to 6% by weight, based on the total weight of the silicon-carbon composite (1).

When the amount of carbon (C) in the first carbon layer satisfies the above range, the desired effect can be effectively achieved.

The thickness of the first carbon layer may be 2 nm to 80 nm, preferably, 3 nm to 50 nm, more preferably, 3 nm to 30 nm.

If the thickness of the first carbon layer is less than the above range, the electrical conductivity of the first carbon layer is too low; thus, when it is applied to a negative electrode active material, there may be a problem in that the reactivity with an electrolyte is increased and the initial efficiency of a secondary battery is deteriorated. Further, the effect of suppressing the volume expansion of the silicon particles and the capacity enhancement may be insignificant, and a uniform coating may not be obtained. In addition, if the thickness of the first carbon layer exceeds the above range, the mobility of lithium ions may be hindered, which increases resistance, and the adhesive strength to the core may be deteriorated.

**Silicon-carbon composite (2)**

The silicon-carbon composite (2) according to an embodiment may be a silicon-carbon composite having a core-shell structure wherein the shell has a multilayer structure comprising at least two carbon layers comprising a first carbon layer and a second carbon layer.

The structure of the core of the silicon-carbon composite (2), each component, and its characteristics are as described above.

The shell of the silicon-carbon composite (2) may comprise at least two carbon layers comprising a first carbon layer and a second carbon layer formed on the first carbon layer.

The first carbon layer may be present on the surface of the core. In addition, the first carbon layer may be present on the surface of the silicon particles and/or the silicon aggregates.

The first carbon layer may comprise at least one selected from the group consisting of amorphous carbon, crystalline carbon, carbon nanofibers, chemical vapor graphene, reduced graphene oxide, and carbon nanotubes. Here, the chemical vapor graphene refers to graphene formed by chemical thermal decomposition deposition (chemical vapor deposition, CVD).

Specifically, the first carbon layer may comprise at least one selected from the group consisting of amorphous carbon, crystalline carbon, and chemical vapor graphene. For example, when the amorphous carbon or crystalline carbon is disposed on the core to form a first carbon layer, the strength of the first carbon layer is appropriately maintained, and the expansion of the core and the growth of silicon crystals in the core can be suppressed. In addition, when the crystalline carbon is disposed on the core to form a first carbon layer, the conductivity of a negative electrode active material can be further enhanced.

For example, when the carbon inside the core and the first carbon layer on the surface of the core comprise amorphous carbon, it is preferable that the thickness of the first carbon layer is 2 nm or more or 3 nm or more.

If the thickness of the first carbon layer is less than the above range, the effect of suppressing volume change may be insufficient, and the volume change due to charge and discharge may increase, thereby deteriorating the cycle performance of a lithium secondary battery.

In particular, according to an embodiment, when the carbon inside the core and the first carbon layer on the surface of the core comprise amorphous carbon, the buffering property against volume expansion is further enhanced due to low crystallinity, and the conductivity is further increased, so that the output characteristics and cycle characteristics of a secondary battery can be further enhanced.

The amorphous carbon may comprise a substance selected from the group consisting of soft carbon (low-temperature calcined carbon), hard carbon, pitch carbide, mesophase pitch carbide, calcined coke, and a combination thereof.

In addition, in a Raman spectrum obtained by Raman spectroscopy of the silicon-carbon composite (1) in which the first carbon layer on the surface of the core comprises amorphous carbon, when the intensity of the D band peak appearing in the range of 1,280 cm$^{-1}$ to 1,400 cm$^{-1}$ is ID, and the intensity of the G band peak appearing in the range of 1,500 cm$^{-1}$ to 1,660 cm$^{-1}$ is IQ the following Relationship 3 is satisfied.

[Relationship 3]

$$ID/IG > 3$$

ID/IG may preferably be 3 to 5, more preferably 3 to 4.

The G band peak is a peak having a Raman shift of, for example, about 1,550 cm$^{-1}$ to about 1,610 cm$^{-1}$ (e.g., around 1,580 cm$^{-1}$), and it may be a peak attributed to graphite. In addition, the D band peak is a peak having a Raman shift of, for example, about 1,290 cm$^{-1}$ to about 1,350 cm$^{-1}$ (e.g., around 1,320 cm$^{-1}$), and it may be a peak attributed to amorphous carbon.

That is, the value of ID/IG may represent the ratio of amorphous carbon to graphite in the carbon layer. In addition, the value of ID/IG indicates the degree of crystallinity of the carbon layer. A higher value of ID/IG may indicate a higher proportion of amorphous carbon.

If ID/IG is less than the above range, the cycle characteristics of a secondary battery may deteriorate.

The Raman spectrum is measured at a laser wavelength of 780 nm using a microscopic Raman spectrometer (Nicolet Almega Ga XR manufactured by Thermo Fisher Scientific).

In the Raman spectrum of the first carbon layer, the intensities of the D band peak and the G band peak may be obtained as follows.

The Raman spectrum, which is composed of the sum of the peak of the D band and the peak of the G band, is divided into two peaks as fitted in a Gaussian function or a Gaussian/Lorenz mixed function using the nonlinear least squares method. The integrated intensities of the obtained D band and G band are obtained, and the peak intensities of the two divided D band peak and the G band peak are calculated, respectively.

Meanwhile, the crystalline carbon may comprise natural graphite, artificial graphite, expandable graphite, graphene, carbon black, fullerene soot, or a combination thereof, but it is not limited thereto.

Natural graphite may be naturally produced graphite and may include flake graphite, high crystalline graphite, microcrystalline or crypto crystalline (amorphous) graphite, or the like.

Artificial graphite is artificially synthesized graphite and is made by heating amorphous carbon at high temperatures. It may be primary graphite, electro graphite, secondary graphite, graphite fiber, or the like. Expandable graphite is made by intercalating chemicals such as acid or alkali between the layers and heating them to solidify the vertical layers of the molecular structure. Graphene refers to a single layer of graphite.

The second carbon layer may be present on the first carbon layer.

The second carbon layer may comprise at least one selected from the group consisting of amorphous carbon, crystalline carbon, carbon nanofibers, chemical vapor graphene, reduced graphene oxide, and carbon nanotubes. In such an event, the first carbon layer and the second carbon layer comprise different types.

According to an embodiment, in the silicon-carbon composite (2), the first carbon layer may comprise at least one selected from the group consisting of amorphous carbon, crystalline carbon, carbon nanofibers, chemical vapor graphene, and carbon nanotubes, and the second carbon layer may comprise reduced graphene oxide (RGO).

The reduced graphene oxide may be formed by partially or substantially completely reducing graphene oxide.

When the second carbon layer comprises reduced graphene oxide, it can function as a barrier layer or a buffer layer, and the buffer layer is effective as a mechanical buffer support surrounding the core and can enhance adhesion with a binder. More specifically, the buffer layer may suppress the deterioration, cracking, and volume expansion of the core caused by the mechanical expansion of silicon during charging and discharging.

When the silicon-carbon composite (2) is used as a negative electrode active material, the contact resistance between the negative electrode active material layer and the current collector and between the negative electrode active material particles can be lowered, thereby enhancing the intercalation and detachment characteristics of lithium.

In addition, the second carbon layer may further comprise graphite.

According to an embodiment, in the silicon-carbon composite, a first carbon layer and a second carbon layer may be sequentially disposed on the core to form a shell.

The first carbon layer may be formed using chemical thermal decomposition deposition (chemical vapor deposition, CVD). The second carbon layer may be formed using one or more methods selected from a liquid coating method and a spray drying method.

Specifically, in the silicon-carbon composite (2), a first carbon layer may be formed on the core by chemical thermal decomposition deposition, and a second carbon layer comprising reduced graphene oxide may be subsequently formed on the first carbon layer using one or more methods selected from a liquid coating method and a spray drying method.

When the first carbon layer is formed on the core by chemical thermal decomposition deposition, carbon (carbon layer) may be mainly formed in the pores in the core. As carbon is uniformly formed in the inner pores, it is possible to minimize the volume expansion of silicon during charging and discharging and the formation of large silicon particles caused by the sintering of nanosilicon by the volume expansion.

Meanwhile, when the second carbon layer comprising reduced graphene oxide is formed on the first carbon layer using at least one method selected from a liquid coating method and a spray drying method, the carbon content can be readily controlled according to the purpose, and low specific surface area, high conductivity, high capacity, and long lifespan can be achieved.

In the silicon-carbon composite (2), the carbon layers that form the shell may be laminated in various ways as long as the desired effect is not impaired. It may be up to four layers, specifically, two to four layers, preferably, two to three layers, for example, two layers.

When the silicon-carbon composite (2) in which at least two carbon layers are sequentially formed on all, most, or part of the surface of the core is used as a negative electrode active material, it is possible to suppress the release of lithium in the core and to suppress the volume change of silicon particles that occurs during the intercalation and detachment of lithium, thereby maintaining high conductivity and conduction path between the negative electrode active material particles. As a result, it is possible to provide a negative electrode active material and a lithium secondary battery having high charge and discharge capacity and excellent cycle lifespan characteristics.

The content of carbon (C) contained in the silicon-carbon composite (2) may be 18% by weight to 60% by weight, 20% by weight to 60% by weight, 20% by weight to 55% by weight, or 30% by weight to 55% by weight, based on the total weight of the silicon-carbon composite (2).

If the content of carbon (C) in the silicon-carbon composite (2) is less than the above range, the effect of suppressing the volume expansion of a negative electrode active material and enhancing the conductivity thereof may be insignificant. If it exceeds the above range, there may be a problem in that the capacity of a secondary battery may decrease and that lithium ions may hardly be detached.

The content of carbon (C) contained in the core of the silicon-carbon composite (2) may be the content of carbon (C) contained in the core of the silicon-carbon composite.

In addition, in the shell of the silicon-carbon composite (2), the amount of carbon (C) in the first carbon layer may be 2% by weight to 10% by weight, preferably, 2% by weight to 8% by weight, more preferably, 3% by weight to 6% by weight, based on the total weight of the silicon-carbon composite (2).

In addition, in the shell of the silicon-carbon composite (2), the amount of carbon (C) in the second carbon layer may be 2% by weight to 10% by weight, preferably, 2% by weight to 8% by weight, more preferably, 2% by weight to 6% by weight, even more preferably, 2% by weight to 5% by weight, based on the total weight of the silicon-carbon composite (2).

If the content of carbon (C) in the second carbon layer is less than the above range, there may be a problem in that the effect of suppressing the volume expansion of a negative electrode active material and enhancing the conductivity thereof may be insignificant. If it exceeds the above range, there may be a problem in that the capacity of a secondary battery may decrease and that lithium ions may hardly be detached.

Specifically, the shell allows lithium to pass through, but prevents oxygen from passing through. It can prevent oxygen from reacting with silicon and/or a silicon oxide compound in the core. In addition, if the shell is uniformly coated to be formed on the core, there is an effect of suppressing cracking caused by stress due to the rapid volume expansion of silicon. Since cracks are formed irregularly and discontinuously, there is a possibility that the electrolyte does not come into contact with the inside of the negative electrode active material or that a portion that is electrically blocked may be present, which causes a defect in the secondary battery. In this regard, the role of the reduced graphene oxide of the second carbon layer is of significance. Since the reduced graphene oxide has high electrical conductivity, it is possible to maintain a state in which the carbon layers are electrically connected.

Meanwhile, the total thickness of the first carbon layer and the second carbon layer may be 5 nm to 100 nm, preferably, 5 nm to 80 nm, more preferably, 5 nm to 50 nm. When the total thickness of the first carbon layer and the second carbon layer satisfies the above range, even if the volume of the core is changed due to the intercalation and detachment of lithium, it is possible to effectively prevent or alleviate the pulverization of the core and to effectively prevent or alleviate side reactions between silicon and electrolyte, thereby enhancing the performance of a secondary battery.

Specifically, the thickness of the first carbon layer may be 2 nm to 50 nm, preferably, 2 nm to 40 nm, more preferably, 3 nm to 30 nm. If the thickness of the first carbon layer is less than the above range, the electrical conductivity of the first carbon layer is too low; thus, when it is applied to a negative electrode active material, there may be a problem in that the reactivity with an electrolyte is increased and the initial efficiency of a secondary battery is deteriorated. Further, the effect of suppressing the volume expansion of the silicon particles and the capacity enhancement may be insignificant, and a uniform coating may not be obtained. In addition, if the thickness of the first carbon layer exceeds the above range, the mobility of lithium ions may be hindered, which increases resistance, and the adhesive strength to the core may be deteriorated.

The thickness of the second carbon layer may be 3 nm to 50 nm, preferably, 3 nm to 30 nm, more preferably, 5 nm to 20 nm. If the thickness of the second carbon layer is less than the above range, the electrical conductivity of the second carbon layer is too low; thus, when it is applied to a negative electrode active material, there may be a problem that the reactivity with an electrolyte is increased, and the initial efficiency is deteriorated. In addition, the effect of suppressing the volume expansion of the silicon particles and the capacity enhancement may be insignificant, and a uniform coating may not be obtained. If the thickness of the second carbon layer exceeds the above range, the thickness of the second carbon layer is too thick, the mobility of lithium ions may be hindered, which increases resistance, and the adhesive strength to the core may be deteriorated.

In the silicon-carbon composite (2), it is preferable that the carbon layer comprising at least two carbon layers is formed such that each carbon layer is formed thinly and uniformly along the entire outer shape of the shell while the outer shape of the shell is maintained. However, it may be in the form in which some or most thereof covers the entire surface of the core. When each of the first carbon layer and the second carbon layer is formed thinly and uniformly on the surface of the core, the electrical contact between the particles contained in the negative electrode active material can be enhanced.

The silicon-carbon composite (2) may have a specific surface area (Brunauer-Emmett-Teller; BET) of 2 $m^2$/g to 30 $m^2$/g, 2 $m^2$/g to 20 $m^2$/g, or 2 $m^2$/g to 10 $m^2$/g.

In addition, in a Raman spectrum obtained by Raman spectroscopy of the silicon-carbon composite (2), when the intensity of the 2D band peak appearing in the range of 2,600 $cm^{-1}$ to 2,760 $cm^{-1}$ is I2D, the intensity of the G band peak appearing in the range of 1,500 $cm^{-1}$ to 1,660 $cm^{-1}$ is IG, and the intensity of the D band peak appearing in the range of 1,280 $cm^{-1}$ to 1,400 $cm^{-1}$ is ID, the following Relationship 4 is satisfied.

[Relationship 4]

$$0.5 < (I2D + IG)\, /ID \leq 2.0$$

In addition, the content of oxygen (O) in the reduced graphene oxide in the second carbon layer may be 0.5% by weight to 10% by weight, preferably, 1% by weight to 10% by weight, more preferably, 3% by weight to 10% by weight, based on the total weight of the reduced graphene oxide. When the content of oxygen (O) in the reduced graphene oxide in the second carbon layer satisfies the above range, the degree of reduction of the graphene oxide increases, whereby reduced graphene oxide with high electrical conductivity can be achieved; thus, the effect of a lithium secondary battery can be further enhanced.

The reduced graphene oxide in the second carbon layer may comprise at least one selected from the group consisting of lithium (Li), sodium (Na), and potassium (K) in an amount of 0.1% by weight to 5% by weight, preferably, 0.1% by weight to 4% by weight, more preferably, 0.1% by weight to 3% by weight, based on the total weight of carbon (C) in the second carbon layer. When the reduced graphene oxide in the second carbon layer comprises at least one selected from the group consisting of lithium (Li), sodium (Na), and potassium (K) in the above content, it may be even more advantageous for achieving the desired effects.

The silicon-carbon composite (2) may have an electrode expansion rate of 50% to 150%, preferably, 50% to 100%, more preferably, 55% to 80%, based on the thickness of the electrode after one cycle of charge and discharge.

The silicon-carbon composite (2) comprises at least two carbon layers comprising a first carbon layer and a second carbon layer, thereby further increasing the strength of the shell layer, increasing the bonding (adhesion) between the silicon-carbon composite (2) and the binder, resulting in a reduced electrode expansion rate, and enhancing the capacity retention rate after cycles (for example, after 100 cycles) of a lithium secondary battery.

**[Method for preparing a silicon-carbon composite]**

The method for preparing a silicon-carbon composite according to an embodiment comprises a first step of etching a silicon-based raw material powder using an etching solution containing a fluorine (F) atom-containing compound; a second step of filtering and drying the product obtained by the etching to prepare a silicon composite; and a third step of coating carbon inside the silicon composite, or coating carbon inside the silicon composite and forming a carbon layer on the surface thereof, using a chemical thermal decomposition deposition method to obtain a silicon-carbon composite.

Specifically, in the method for preparing a silicon-carbon composite, the first step may comprise etching a silicon-based raw material powder using an etching solution containing a fluorine (F) atom-containing compound.

The silicon-based raw material powder may comprise a powder comprising silicon capable of reacting with lithium, for example, a powder comprising two or more of silicon, silicon oxide, and silicon dioxide.

The etching step may comprise dry etching and wet etching.

If dry etching is used, selective etching may be possible.

Silicon dioxide of the silicon-based raw material powder is dissolved and eluted by the etching step to thereby form pores.

In addition, pores may be considered to be formed by the following Reaction Schemes 2 and 3.

[Reaction Scheme 2] $\quad SiO_2 + 4HF\ (gas) \rightarrow SiF_4 + 2H_2O$

[Reaction Scheme 3] $\quad SiO_2 + 6HF\ (aq.\ solution) \rightarrow H_2SiF_6 + 2H_2O$

Pores (voids) may be formed where silicon dioxide is dissolved and removed in the form of $SiF_4$ and $H_2SiF_6$ by the reaction mechanism as in the above reaction schemes.

In addition, silicon dioxide contained in the silicon composite may be removed depending on the degree of etching, and pores may be formed therein.

Here, etching refers to a process in which the silicon-based raw material powder is treated with an etching solution containing a fluorine (F) atom-containing compound.

A commonly used etching solution containing a fluorine atom may be used effects as the etching solution containing a fluorine (F) atom-containing compound without limitation within a range that does not impair the.

Specifically, the fluorine (F) atom-containing compound may comprise at least one selected from the group consisting of HF, $NH_4F$, and $HF_2$. As the fluorine (F) atom-containing compound is used, the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The silicon composite may have some remaining silicon oxide and some remaining silicon dioxide.

Specifically, the content of silicon dioxide in the silicon composite may be 0.1 to 5% by weight, preferably, 0.2 to 5% by weight, more preferably, 0.5 to 4% by weight. A negative electrode active material comprising a composite containing silicon dioxide in the above range is preferable because its charge and discharge cycle characteristics are good and it can provide a lithium secondary battery having a high battery capacity.

In addition, the number of oxygen present on the surface of the silicon composite may be lowered by the etching. That is, it is possible to significantly lower the oxygen fraction on the surface of the silicon composite and to reduce the surface resistance through the etching. As a result, when the silicon-carbon composite is applied to a negative electrode active material, the electrochemical properties, particularly, the lifespan characteristics of a lithium secondary battery can be remarkably improved.

According to an embodiment, since silicon dioxide is removed by etching, whereby the oxygen concentration is significantly reduced, the molar ratio (O/Si) of oxygen (O) atoms to silicon (Si) atoms in the silicon composite and the silicon-carbon composite can be significantly reduced.

Meanwhile, pores may be formed in the portion where silicon dioxide is removed by the etching. Specifically, the silicon composite after the etching and before carbon coating may be porous.

In addition, it is characterized in that the average particle diameter of the silicon composite hardly changes by the etching.

In addition, selective etching may be performed depending on the desired purpose. As the selective etching removes a large amount of silicon dioxide, it may comprise silicon (Si) in a very high fraction as compared with oxygen (O). In particular, the surface of etched silicon particles may comprise oxygen (O) at a very low fraction as compared with silicon (Si). In such an event, it is possible to obtain a lithium secondary battery having an excellent capacity retention rate and enhanced discharge capacity and initial efficiency.

In the method for preparing a silicon-carbon composite, the second step may comprise filtering and drying the product obtained by the etching to obtain a silicon composite. The filtration and drying step may be carried out by a commonly used method.

In the method for preparing a silicon-carbon composite, the third step may comprise forming a carbon layer on the surface of the silicon composite using a chemical thermal decomposition deposition method to obtain a silicon-carbon composite.

The electrical contact between the silicon-carbon composite particles may be enhanced by the step of forming a carbon layer in the third step. In addition, as the charge and discharge are carried out, excellent electrical conductivity can be achieved even after the electrode is expanded, so that the performance of a lithium secondary battery can be further enhanced.

Specifically, the carbon layer may increase the conductivity of a negative electrode active material to enhance the output characteristics and cycle characteristics of a battery and may increase the stress relaxation effect when the volume of the active material is changed.

The carbon layer may comprise at least one selected from the group consisting of graphene, reduced graphene oxide, a carbon nanotube, a carbon nanofiber, and graphite.

The formation of the carbon layer in the third step may be carried out by injecting at least one selected from a compound represented by the following Formulae 1 to 3 and carrying out a reaction in a gaseous state at 400°C to 1,200°C:

$$[\text{Formula 1}] \qquad C_NH_{(2N + 2-A)}[OH]_A$$

in Formula 1, N is an integer of 1 to 20, and A is 0 or 1,

$$[\text{Formula 2}] \qquad C_NH_{(2N-B)}$$

in Formula 2, N is an integer of 2 to 6, and B is an integer of 0 to 2,

$$[\text{Formula 3}] \qquad C_xH_yO_z$$

in Formula 3, x is an integer of 1 to 20, y is an integer of 0 to 25, and z is an integer of 0 to 5.

For example, the third step may comprise forming carbon in the core and the first carbon layer in the shell by injecting at least one selected from a compound represented by the following Formulae 1 to 3 and carrying out a reaction in a gaseous state at 400°C to 1,200°C.

That is, when the third step is performed, a silicon-carbon composite (1) having a core-shell structure can be obtained in which the core comprises silicon particles and carbon, and the shell comprises a carbon layer (first carbon layer).

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxytoluene (BHT).

In addition, a carbon coating may be uniformly formed on the surface of the pores inside the silicon-carbon composite. This is preferable since the cycle lifespan is further enhanced.

The carbon source gas may further comprise at least one inert gas selected from hydrogen, nitrogen, helium, and argon. The reaction may be carried out, for example, at 400°C to 1,200°C, specifically, 500°C to 1,100°C, more specifically, 600°C to 1,000°C.

The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto.

In the method for preparing a silicon-carbon composite according to an embodiment, it is possible to form a thin and uniform carbon layer comprising amorphous carbon, crystalline carbon, a carbon nanofiber, chemical vapor graphene, reduced graphene oxide, or a carbon nanotube as a main component on the surface of the silicon composite even at a relatively low temperature through a gas-phase reaction of the carbon source gas. In addition, the detachment reaction in the carbon layer thus formed does not substantially take place.

In addition, since carbon is uniformly formed inside the silicon composite and over the entire surface thereof through the gas-phase reaction, a carbon film (carbon layer) having high crystallinity can be formed.

Thus, when the silicon-carbon composite is used as a negative electrode active material, the electrical conductivity of the negative electrode active material can be enhanced without changing the structure.

In addition, according to an embodiment, when a reactive gas containing the carbon source gas and an inert gas is supplied to the silicon composite, the reactive gas penetrates into the open pores of the silicon composite, and a conductive carbon material such as one or more graphene-containing materials selected from graphene, reduced graphene oxide, and graphene oxide, a carbon nanotube, and a carbon nanofiber is grown on the surface of the silicon composite.

For example, as the reaction time elapses, the conductive carbon material deposited on the surface of silicon in the silicon composite is gradually grown to obtain the silicon-carbon composite.

Meanwhile, according to an embodiment, the specific surface area of the silicon-carbon composite may decrease depending on the amount of carbon coating.

The structure of the graphene-containing material may be a layer, a nanosheet type, or a structure in which several flakes are mixed.

If a carbon layer comprising a graphene-containing material is uniformly formed over the entire surface of the silicon composite, it is possible to suppress volume expansion as a graphene-containing material that has enhanced conductivity and is flexible for volume expansion is directly grown on the surface of the silicon particles. In addition, the coating of a carbon layer may reduce the chance that silicon directly meets the electrolyte, thereby reducing the formation of a solid electrolyte interphase (SEI) layer. In addition, the carbon present in the silicon-carbon composite may be uniformly present inside and/or on the surface of the composite.

According to an embodiment, the step of forming a carbon coating layer allows most of the open and closed pores present inside and on the surface of the silicon composite to be filled with carbon. As a result, the porosity of the silicon-carbon composite can be significantly reduced. That is, the silicon-carbon composite may be without pores or may have a small number of pores. For example, since the silicon-carbon composite has almost no pores, the strength and density of the silicon-carbon composite are increased, which can increase the discharge capacity per volume of a lithium secondary battery.

If pores are present in the silicon-carbon composite after the carbon coating, the porosity is as described above.

In addition, according to an embodiment, the silicon-carbon composite may have a three-dimensional (3D) structure in which the silicon-carbon composite particles are combined with each other.

Meanwhile, the method for preparing a silicon-carbon composite according to an embodiment may further comprise a fourth step of forming a second carbon layer on the first carbon layer using a liquid coating method after forming the first carbon layer.

In the method for preparing a silicon-carbon composite, the silicon-carbon composite (1) comprising the first carbon layer can be obtained as it comprises the first to third steps, and the silicon-carbon composite (2) comprising the first carbon layer and the second carbon layer can be obtained as it comprises the first to fourth steps.

Specifically, referring back to Fig. 1, a silicon composite of Fig. 1(B) can be obtained by the first step of etching and the second step of filtering and drying the product obtained by the etching.

For example, as shown in Fig. 1(B), the silicon composite may comprise silicon particles (20) and a plurality of pores (10).

Silicon dioxide contained in the silicon composite may be removed depending on the degree of etching, and pores may be formed therein.

In addition, the number of oxygen present on the surface of the silicon composite may be lowered by the etching. That is, it is possible to significantly lower the oxygen fraction on the surface of the silicon composite and to reduce the surface resistance through the etching. As a result, when the silicon-carbon composite is applied to a negative electrode active material, the electrochemical properties, particularly, the lifespan characteristics of a lithium secondary battery can be remarkably improved.

Meanwhile, a silicon-carbon composite (1) of Fig. 1(C) can be obtained by the third step of using a chemical thermal decomposition deposition method ((1) in Fig. 1). In such an event, in the silicon-carbon composite (1), carbon may be coated inside the silicon composite, or carbon may be coated inside the silicon composite and a carbon layer (first carbon layer) may be formed on the surface thereof.

Specifically, the silicon-carbon composite (1) formed by the third step may comprise silicon particles (20), specifically, a silicon aggregate in which the silicon particles (20) are combined with (or interconnected to) each other, wherein a carbon layer (first carbon layer) (40) may be formed on the surface of the silicon particles, and carbon (45) may be formed as it is uniformly dispersed and/or distributed between the silicon particles (20). In addition, the silicon-carbon composite (1) may comprise pores (10) therein.

When a chemical thermal decomposition deposition method is used to form a carbon layer (first carbon layer) in the third step, most of the pores inside the silicon composite are filled with carbon, or, for example, an amorphous carbon layer is uniformly coated, which has the advantage of suppressing volume expansion of silicon and/or sintering of silicon during discharge.

The electrical contact between the particles of the silicon-carbon composite (1) may be enhanced by the step of forming a carbon layer (first carbon layer) in the third step. In addition, as the charge and discharge are carried out, excellent electrical conductivity may be imparted even after the electrode is expanded, so that the performance of a secondary battery can be further enhanced.

In addition, a silicon-carbon composite (2) of Fig. 1(D) can be obtained in which a second carbon layer is formed on the first carbon layer by the fourth step of using the liquid coating method ((2) in Fig. 1).

Specifically, the silicon-carbon composite (2) prepared by the fourth step may have a core-shell structure, wherein the core may comprise silicon particles (20) and carbon (45), and the shell may comprise a first carbon layer (40) and a second carbon layer (50) on the first carbon layer (40). In addition, the silicon-carbon composite (2) may comprise pores (10) therein.

The second carbon layer may be formed using reduced graphene oxide. The reduced graphene oxide may be formed by partially or substantially completely reducing graphene oxide. Specifically, a second carbon layer may be formed from reduced graphene oxide on the surface of the first carbon layer through a partial $\pi$-$\pi$ bond between carbon-carbon layers or a physical bond while it is dried by a spray dryer.

The formation of the second carbon layer may be carried out using one or more methods selected from a dry coating method and a liquid coating method.

Specifically, the formation of the second carbon layer may be carried out using a spray drying method among a liquid coating method. When a spray drying method is used to form a second carbon layer, it is possible to control the carbon content by adjusting the concentration of reduced graphene oxide and to carry out the coating at a low temperature unlike a chemical thermal decomposition deposition method, resulting in the advantages that an increase in the crystal size of silicon caused during carbon coating at a high temperature would not take place.

In the formation of a second carbon layer, graphene oxide or reduced graphene oxide is dispersed in a solvent to prepare a dispersion, in which the concentration of the dispersion may be 0.01 to 50 mg/ml.

In addition, the temperature in the spray drying may be 100°C to 500°C, specifically, 150°C to 350°C. In addition, when spray drying is carried out at the above temperature using graphene oxide, the graphene oxide can be reduced to form reduced graphene oxide.

That is, in the preparation of the silicon-carbon composite (2), the first carbon layer may be formed using a chemical thermal decomposition deposition method, and the second carbon layer may be formed using a spray drying method.

The second carbon layer formed using the spray drying method may be thermally treated at 500°C to 800°C under inert gas to adjust the oxygen content of the second carbon layer.

Meanwhile, according to an embodiment, once the first carbon layer or the second carbon layer has been formed in any one or more of the third step and the fourth step, a step of carrying out at least one of pulverization and classification of the silicon-carbon composite may be further carried out to have the desired average particle size.

For example, one or more of the silicon composite powders may be combined with each other to form aggregates after the first carbon layer is formed in the third step, and the method may further comprise pulverizing and classifying the silicon-carbon composite such that the average particle diameter thereof is 2 $\mu$m to 15 $\mu$m. The classification may be carried out to adjust the particle size distribution of the silicon-carbon composite, for which dry classification, wet classification, or classification using a sieve may be used.

In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used.

In addition, a desired particle size distribution may be obtained by carrying out pulverization and classification at one time. After the pulverization, it is effective to divide the coarse powder part and the granular part with a classifier or sieve.

Specifically, once the first carbon layer and/or second carbon layer has been formed, the pulverization process may be carried out.

Alternatively, a step of performing at least one step of pulverization and classification of the silicon-carbon composite having a core-shell structure obtained in the fourth step may be further carried out (fifth step).

According to an embodiment, as the silicon-carbon composite having a core-shell structure is subjected to pulverization and/or classification, a silicon-carbon composite having the desired average particle size can be obtained.

Specifically, in the fifth step, the silicon-carbon composite (2) obtained in the fourth step may be classified. Alternatively, the silicon-carbon composite (2) may be pulverized. Alternatively, the silicon-carbon composite (2) may be pulverized and classified. Specifically, the silicon-carbon composite (2) obtained in the fourth step may be classified and, if necessary, pulverized. Alternatively, the silicon-carbon composite (2) obtained in the fourth step may be pulverized.

According to the above preparation method, a silicon-carbon composite comprising silicon particles and carbon and having a molar ratio (O/Si) of oxygen (O) atoms to silicon (Si) atoms within a specific range can be provided. When the silicon-carbon composite is used in a negative electrode active material to manufacture a lithium secondary battery, it is possible to significantly enhance the discharge capacity and initial efficiency, along with an excellent capacity retention rate.

In addition, as the silicon-carbon composite comprises at least one carbon layer, it is possible to secure adequate electrical conductivity and to adjust the specific surface area appropriately. Thus, the performance of a lithium secondary battery can be enhanced. Further, the characteristics of a secondary battery can be controlled by varying the structure of the shell of the silicon-carbon composite.

In particular, the silicon-carbon composite comprises at least two carbon layers comprising a first carbon layer and a second carbon layer, thereby further increasing strength, increasing the bonding (adhesion) between the silicon-carbon composite (2) and the binder, resulting in a reduced electrode expansion rate, and further enhancing the capacity retention rate after cycles of a lithium secondary battery.

In addition, the preparation method according to an embodiment has an advantage in that mass production is possible through a continuous process with minimized steps.

The silicon-carbon composite prepared by the above preparation method can be advantageously used in a negative electrode active material and a lithium secondary battery, and it can efficiently achieve the desired effect.

## [Negative electrode active material]

The negative electrode active material according to an embodiment may comprise the silicon-carbon composite.

In addition, the negative electrode active material may further comprise a carbon-based negative electrode material, specifically, a graphite-based negative electrode material.

The negative electrode active material may be used as a mixture of the silicon-carbon composite and the carbon-based negative electrode material, for example, a graphite-based negative electrode material. In such an event, the electrical resistance of the negative electrode active material can be reduced, while the expansion stress involved in charging can be relieved at the same time.

The carbon-based negative electrode material may comprise, for example, at least one selected from the group consisting of natural graphite, synthetic graphite, soft carbon, hard carbon, mesocarbon, a carbon fiber, a carbon nanotube, pyrolytic carbon, coke, a glass carbon fiber, a sintered organic high molecular compound, and carbon black.

The content of the carbon-based negative electrode material may be 10% by weight to 95% by weight, preferably, 30% by weight to 90% by weight, more preferably, 30% by weight to 80% by weight, based on the total weight of the negative electrode active material.

In addition, if a silicon-carbon composite containing silicon particles having a crystallite size of 2 nm to 10 nm is used as mixed with graphite-based materials generally having low volume expansion, only the silicon particles do not cause large volume expansion; thus, a lithium secondary battery with excellent cycling characteristics can be obtained.

In addition, the negative electrode active material may further comprise silicon powder having carbon coated on the surface and a composite composed of silicon powder and graphite.

According to an embodiment, there is provided a negative electrode comprising the negative electrode active material and a lithium secondary battery comprising the same.

The lithium secondary battery may comprise a positive electrode, a negative electrode, a separator interposed between the positive electrode and the negative electrode, and a non-aqueous liquid electrolyte in which a lithium salt is dissolved, wherein the negative electrode may comprise a negative electrode active material comprising the silicon-carbon composite.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may each further comprise a conductive agent and a binder.

Materials known in the art may be used as a material constituting the negative electrode current collector and a material constituting the positive electrode current collector. Materials known in the art may be used as a binder and a conductive material added to the negative electrode and the positive electrode.

If the negative electrode is composed of a current collector and an active material layer supported thereon, the negative electrode may be prepared by coating the negative electrode active material composition comprising the silicon-carbon composite on the surface of the current collector and drying it.

In addition, the lithium secondary battery comprises a non-aqueous liquid electrolyte in which the non-aqueous liquid electrolyte may comprise a non-aqueous solvent and a lithium salt dissolved in the non-aqueous solvent.

A solvent commonly used in the field may be used as a non-aqueous solvent. Specifically, an aprotic organic solvent may be used.

Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The lithium secondary battery may comprise a non-aqueous lithium secondary battery.

The negative electrode active material and the lithium secondary battery using the silicon-carbon composite according to an embodiment can enhance charge and discharge capacity, as well as initial charge and discharge efficiency and capacity retention rate.

Hereinafter, the present invention will be described in detail with reference to examples. The following examples are only illustrative of the present invention, and the scope of the present invention is not limited thereto.

**Mode for the Invention**

**<Example 1>**

**Preparation of a silicon-carbon composite**

(1) Step 1: 50 g of a silicon oxide ($SiO_x$, x = 1.01) powder prepared by vapor deposition using a silicon powder and a silicon dioxide powder and having the physical properties shown in Table 1 below was dispersed in 50 g of water, which was stirred at a speed of 300 rpm, and 110 ml of an aqueous solution of 40% by weight of HF was added as an etching solution to carry out etching the silicon-based raw material powder for 1 hour.

(2) Step 2: The product obtained by the etching above was filtered and dried at 100°C for 2 hours.

Then, in order to control the particle size of the composite, it was pulverized using a mortar to have an average particle diameter of about 5 $\mu$m, to thereby prepare a silicon composite (B1).

(4) Step 3: 10 g of the silicon composite was placed inside a tubular electric furnace, and argon (Ar) and methane gas flowed at a rate of 1 liter/minute, respectively. It was maintained at 900°C for 1 hour and then cooled to room temperature, whereby the surface of the silicon composite was coated with carbon, to thereby prepare a silicon-carbon composite having the content of each component and physical properties shown in Table 3 below.

In order to control the particle size of the silicon-carbon composite, it was pulverized and classified to have an average particle diameter of about 5 $\mu$m by a mechanical method, thereby preparing a silicon-carbon composite (1).

**Fabrication of a lithium secondary battery**

A negative electrode and a battery (coin cell) comprising the silicon-carbon composite (1) as a negative electrode active material were each prepared.

The negative electrode active material, Super-P as a conductive material, and polyacrylic acid were mixed at a weight ratio of 80:10:10 with water to prepare a negative electrode active material composition having a solids content of 45%.

The negative electrode active material composition was applied to a copper foil having a thickness of 18 $\mu$m and dried to prepare an electrode having a thickness of 70 $\mu$m. The copper foil coated with the electrode was punched in a circular shape having a diameter of 14 mm to prepare a negative electrode for a coin cell.

Meanwhile, a metallic lithium foil having a thickness of 0.3 mm was used as a positive electrode.

A porous polyethylene sheet having a thickness of 25 $\mu$m was used as a separator. A liquid electrolyte in which $LiPF6$ had been dissolved at a concentration of 1 M in a mixed solvent of ethylene carbonate (EC) and diethylene carbonate (DEC) at a volume ratio of 1:1 was used as an electrolyte. The above components were employed to fabricate a coin cell (battery, CR2032).

**<Examples 2 to 7>**

The same method as in Example 1 was carried out to prepare a silicon-carbon composite (1), and a negative electrode active material and a lithium secondary battery were manufactured using the same, except that a silicon-based raw material powder (A) and a silicon composite (B) as shown in Tables 1 and 2 below were used, the type and amount of carbon source gas were changed as shown in Table 3, and the molar ratio (O/Si) of oxygen (O) atoms to silicon (Si) atoms in the silicon-carbon composite was changed.

**<Example 8>**

A silicon-carbon composite (2) having a second carbon layer formed using a spray dryer on the surface of the first carbon layer of the silicon-carbon composite (1) prepared in Example 2 was obtained.
Formation of the second carbon layer by a spray dryer is as follows:
(1) to (3) Steps 1 to 3: The same procedures as in Example 2 were carried out.
(4) Step 4: The silicon-carbon composite with a first carbon layer obtained in Example 2 was added to graphene oxide of 0.5% by weight at the same weight ratio to prepare a graphene oxide dispersion. While the dispersion was injected at 100 ml/minute using a metering pump, spray drying was carried out at a concentration of the dispersion of 1.0 mg/ml and a spray temperature of 250°C, thereby obtaining a silicon-carbon composite having two layers comprising a first carbon layer and a second carbon layer.
(5) Step 5: In order to control the particle size of the silicon-carbon composite, it was pulverized and classified to have an average particle diameter ($D_{50}$) as shown in Table 4 by a mechanical method, thereby preparing a final silicon-carbon composite (2).
The silicon-carbon composite (2) was used to manufacture a negative electrode active material and a lithium secondary battery in the same method as in Example 1.

**<Example 9>**

The same method as in Example 8 was carried out to prepare a silicon-carbon composite (2), and a negative electrode active material and a lithium secondary battery were manufactured using the same, except that a spray dryer was used on the first carbon layer of the silicon-carbon composite (1) prepared in Example 4, and it was adjusted to have the components and properties as shown in Table 4.

**<Comparative Example 1>**

A negative electrode active material and a lithium secondary battery using the same were manufactured in the same manner as in Example 1, except that the etching process of step 1 using an etching solution in Example 1 was not carried out.

**<Comparative Example 2 to 4>**

The same method as in Example 1 was carried out to prepare a silicon-carbon composite, and a lithium secondary battery was manufactured using the same, except that a silicon composite (B) having the atomic content and properties as shown in Table 2 below was used, the type and amount of carbon source gas were changed as shown in Table 3, and the molar ratio (O/Si) of oxygen (O) atoms to silicon (Si) atoms in the silicon-carbon composite was changed.

**Test Example**

**<Test Example 1> Electron microscope analysis**

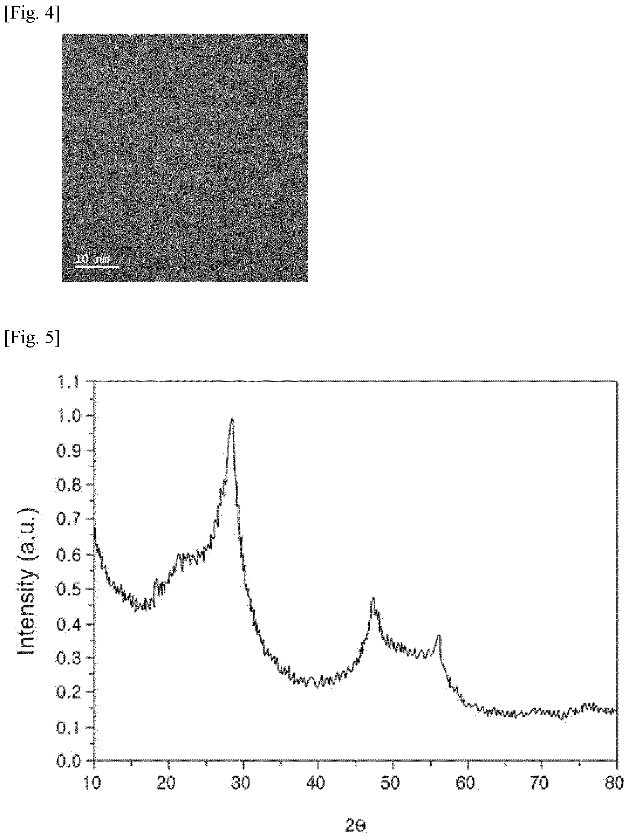

Figs. 2 and 3 show ion beam scanning electron microscope (FIB-SEM, [FC-FI20]-FIB II instrument) photographs of the silicon composite (B1) and the silicon-carbon composite (C1) prepared in Example 1, respectively.
That is, Figs. 2 and 3 show photographs of the silicon composite (B1) and the silicon-carbon composite (C1) in a magnification of 30,000 as analyzed by an ion beam scanning electron microscope (FIB-SEM), respectively.
In addition, Fig. 4 shows an ion beam transmission electron microscope (TEM-FIB) photograph of the silicon-carbon composite (C1) prepared in Example 1. Here, the white bright dots indicate Si crystals, and the dark dots indicate carbon (C). As can be seen from Fig. 4, the surface of the silicon-carbon composite (C1) particles had a large amount of carbon, and the inside of the particles had a large amount of Si components.

**<Test Example 2> X-ray diffraction analysis**

The crystal structure of the silicon-carbon composites prepared in the Examples was analyzed with an X-ray diffraction analyzer (X'Pert3 of Malvern Panalytical).

Specifically, the applied voltage was 40 kV, and the applied current was 40 mA. The range of $2\theta$ was 10° to 80°, and it was measured by scanning at an interval of 0.05°.

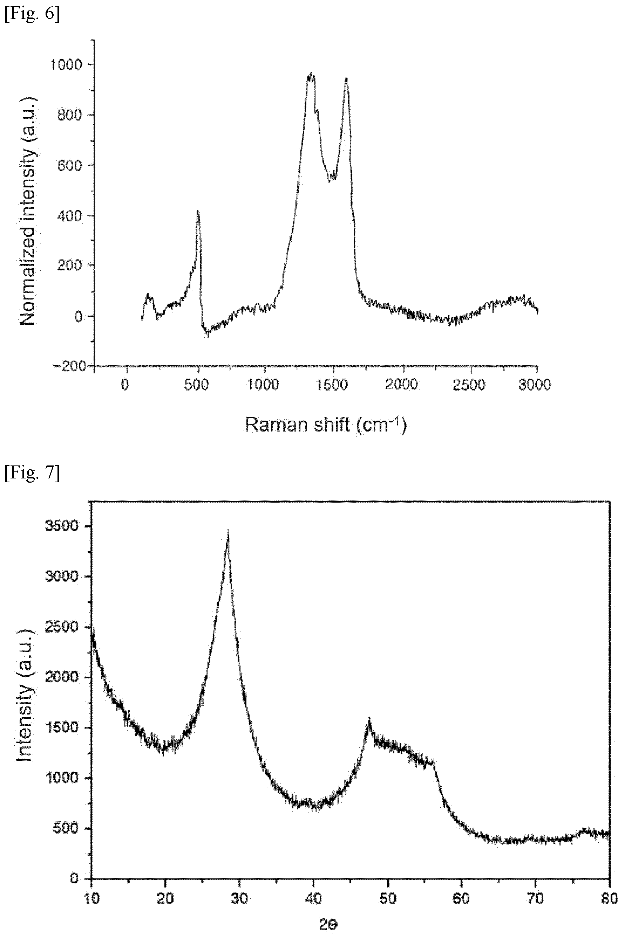

Figs. 5 and 7 show the measurement results of an X-ray diffraction analysis of the silicon-carbon composites of Examples 1 and 4, respectively.

Referring to Figs. 5 and 7, as can be seen from the X-ray diffraction patterns, the silicon-carbon composites of Examples 1 and 4 had peaks corresponding to Si crystals at around diffraction angles ($2\theta$) of 28.3°, 47.5°, 56.1°, 69.1°, and 76.5°, indicating that they contained crystalline Si, and peaks at around 22.5° and 50°, indicating that they contained silicon oxide ($SiO_x$, $0.4 \leq x \leq 2$). In addition, the diffraction angle ($2\theta$) of carbon could not be confirmed since it overlapped with the Si (111) peak.

<Test Example 3> Analysis of the content of each component element in the silicon composite or silicon-carbon composite

The content of each component element of oxygen (O) and carbon (C) in the silicon composites or the porous silicon-carbon composite prepared in the Examples and Comparative Examples were analyzed.

The contents of oxygen (O) and carbon (C) were analyzed by an elemental analyzer, respectively. The content of silicon (Si) was a value calculated based on the content of oxygen (O).

<Test Example 4> Measurement of the average particle diameter of the silicon composite or silicon-carbon composite

The average particle diameter ($D_{50}$) of the composite particles prepared in the Examples and Comparative Examples was measured as an average diameter $D_{50}$, i.e., a particle diameter or median diameter when the cumulative volume is 50% in particle size distribution measurement according to a laser beam diffraction method.

<Test Example 5> Raman spectroscopic analysis

The silicon-carbon composite prepared in Example 1 was subjected to a Raman spectroscopic analysis. The Raman analysis was carried out using a micro-Raman analyzer (Renishaw, RM1000-In Via) at 2.41 eV (514 nm). The results are shown in Fig. 6.

Referring to Fig. 6, the G band (1,580 $cm^{-1}$) and the D band (1,350 $cm^{-1}$) were observed in the Raman spectrum obtained by Raman spectroscopy, from which it is confirmed that the silicon-carbon composite prepared in Example 1 comprised carbon having conductivity.

Accordingly, the silicon-carbon composite prepared in Example 1 was excellent in conductivity, and the performance of the lithium secondary battery could be remarkably enhanced.

<Test Example 6> Measurement of electrode expansion rate

The thickness (N1) of a press-rolled negative electrode using the negative electrode active material prepared in the Examples before electrode manufacture was measured.

The cycle lifespan of a secondary battery (coin cell) manufactured using the negative electrode was measured, and the measurement was terminated at 80% of the cycle lifespan. Thereafter, the coin cell was disassembled, the negative electrode was separated, and it was immersed in a dimethyl carbonate (DMC) solvent and then taken out. Next, after the solvent was completely dried, the thickness (N2) of the side surface of the separated negative electrode was measured using SEM.

The ratio of the thickness (N1) of the press-rolled negative electrode before the electrode manufacture and the thickness (N2) of the negative electrode whose measurement was terminated at 80% of the cycle lifespan was converted into a percentage and calculated as follows:

Electrode expansion rate (%) = thickness (N2) of a negative electrode when the measurement is terminated at 80% of the cycle life/thickness of a press-rolled negative electrode before electrode manufacture (N1) $\times$ 100     [Equation A]

**<Test** Example 7> Measurement of capacity, initial efficiency, and capacity retention rate of the lithium secondary battery

The coin cells (lithium secondary batteries) prepared in the Examples and Comparative Examples were each charged at a constant current of 0.1 C until the voltage reached 0.005 V and then the current reached 0.005 C at a constant voltage. It was then discharged at a constant current of 0.1 C until the voltage reached 1.5 V to measure the charge capacity (mAh /g), discharge capacity (mAh/g), and initial efficiency (%).

[Relationship 5]

$$\text{Initial efficiency (\%)} = \text{discharge capacity/charge capacity} \times 100$$

In addition, the coin cells prepared in the Examples and Comparative Examples were each charged and discharged once in the same manner as above and, from the second cycle, charged at a constant current of 0.1 C until the voltage reached 0.005 V, at a constant voltage until the current reached 0.005 C, and at a constant current until the voltage reached 0.005 V. It was then discharged at a constant current of 0.2 C until the voltage reached 1.5 V to measure the cycle characteristics (capacity retention rate upon 50 cycles and 100 cycles, %).

Capacity retention rate upon 50 cycles (%) = 51st discharge capacity/2nd discharge capacity × 100　　　　[Relationship 6]

Capacity retention rate upon 100 cycles (%) = 101st discharge capacity/2nd --> discharge capacity × 100　　　　[Relationship 7]

The content of each element and physical properties of the silicon-based raw material powders, silicon composites, and silicon-carbon composites of the Examples and Comparative Examples are summarized in Tables 1 to 4 below. The characteristics of the lithium secondary batteries using the same are summarized in Tables 3 and 4 below.

[Table 1]

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Silicon-based raw material powder (A) | O content (% by weight) | 35.5 | 35.5 | 35.5 | 37.6 | 37.6 | 37.6 | 37.6 | 35.5 | 35.5 | 35.5 | 35.5 |
| | $D_{50}$ (μm) | 5 | 5 | 5 | 7 | 7 | 7 | 7 | 5 | 5 | 5 | 5 |
| | Density (g/cm$^3$) | 2.3 | 2.3 | 2.3 | 2.3 | 2.3 | 2.3 | 2.3 | 2.3 | 2.3 | 2.3 | 2.3 |
| | BET (m$^2$/g) | 5.8 | 5.8 | 5.8 | 3.8 | 3.8 | 3.8 | 3.8 | 5.8 | 5.8 | 5.8 | 5.8 |

[Table 2]

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Silicon composite (B) | Si content (% by weight) | 80.5 | 83.7 | 89.8 | 94.4 | 96.9 | 97.1 | 98.5 | - | 76.3 | 70.2 | 78.5 |
| | O content (% by weight) | 19.5 | 16.3 | 10.2 | 5.6 | 3.1 | 2.9 | 1.5 | | 23.7 | 29.8 | 21.5 |
| | O/Si molar ratio | 0.42 | 0.34 | 0.2 | 0.1 | 0.06 | 0.05 | 0.03 | | 0.54 | 0.74 | 0.48 |
| | Si crystallite size (nm) | 2.2 | 2.2 | 2.2 | 2.2 | 2.2 | 2.2 | 2.2 | | Amorphous | Amorphous | 2.3 |
| | $D_{50}$ (μm) | 5 | 5 | 5 | 5 | 5 | 5 | 5 | | 5 | 5 | 5 |
| | Density (g/cm$^3$) | 1.98 | 1.91 | 1.81 | 1.79 | 1.79 | 1.77 | 1.79 | | 1.98 | 2.1 | 2.1 |
| | BET (m$^2$/g) | 419 | 503 | 687 | 862 | 959 | 987 | 862 | | 415 | 401 | 585 |

[Table 3]

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Silicon-carbon composite (1) | Carbon source gas | $CH_4$ | $C_2H_2$ | $CH_4$ | $CH_4$ | $C_2H_4$ | $CH_4$ | $C_2H_4$ | $CH_4$ | $C_2H_2$ | $CH_4$ | $CH_4$ |
| | C content (% by weight) | 21 | 37 | 31 | 34 | 43 | 38 | 41 | 3 | 10.6 | 14.2 | 11 |
| | Si content (% by weight) | 62.9 | 51.1 | 61.2 | 61.8 | 54.8 | 59.9 | 58 | 62.5 | 68.1 | 59.7 | 69.6 |
| | O/Si molar ratio | 0.44 | 0.41 | 0.22 | 0.12 | 0.07 | 0.06 | 0.03 | 0.96 | 0.55 | 0.76 | 0.48 |
| | Si crystallite size (nm) | 8.9 | 2.4 | 7 | 6.8 | 2.7 | 7.4 | 3 | 6 | 2.7 | 11 | 15 |
| | $D_{50}$ (μm) | 5 | 5.4 | 5 | 5.2 | 6 | 6.1 | 5 | 5 | 5 | 5 | 5 |
| | Density (g/cm$^3$) | 2.1 | 2.3 | 2.2 | 2.3 | 2.3 | 2.3 | 2.3 | 2.3 | 2.2 | 2.2 | 2.3 |
| | BET (m$^2$/g) | 11.1 | 2.7 | 3.3 | 3.7 | 4.1 | 2.6 | 2.6 | 4.1 | 246 | 89 | 80 |
| | Porosity (%) | 7.6 | 4.8 | 3.3 | 1.5 | 0.8 | 0.6 | 0.01 | | 61 | 27 | 31 |

(continued)

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Characteristics of the secondary battery | Discharge capacity (mAh/g) | 1849 | 1658 | 1923 | 1891 | 1621 | 1832 | 1751 | 1542 | 1894 | 1739 | 1553 |
| | Initial efficiency (%) | 84.8 | 83.6 | 90.6 | 91.3 | 89.1 | 92.5 | 91 | 74.8 | 79.8 | 78.6 | 79.6 |
| | Capacity retention rate upon 50 cycles (%) | 85.3 | 87.5 | 85.4 | 84.6 | 86.2 | 85.8 | 86 | 85.1 | 72.4 | 77.3 | 78 |

[Table 4]

| | | | | Example | |
|---|---|---|---|---|---|
| | | | | 8 | 9 |
| Shell | First carbon layer | | | Example 2 | Example 4 |
| | Second carbon layer | Type | | Reduced graphene oxide | Reduced graphene oxide |
| | | Method of formation | | Spray drying | Spray drying |
| | | Total weight of Li, Na, and K (% by weight) | | 3 | 2 |
| | | Content of carbon (% by weight) | | 4 | 3 |
| | | Thickness (nm) | | 10 | 8 |
| Silicon-carbon composite (2) | O/Si molar ratio | | | 0.42 | 0.12 |
| | C content (% by weight) | | | 40 | 37 |
| | Si crystallite size (nm) | | | 2.5 | 6.8 |
| | Porosity (%) | | | 0.5 | 1 |
| | $D_{50}$ ($\mu$m) | | | 5 | 5 |
| | Density (g/cm$^3$) | | | 2.3 | 2.3 |
| | BET (m$^2$/g) | | | 2.5 | 3.1 |
| Characteristics of the secondary battery | Initial charge and discharge capacity (mAh/g) | | | 1,655 | 1,880 |
| | Electrode expansion rate (%) | | | 55 | 61 |
| | Initial efficiency (%) | | | 84.2 | 90.5 |
| | Capacity retention rate upon 100 cycles (%) | | | 93 | 90 |

As can be seen from Tables 3 and 4 above, in the silicon-carbon composites of Examples 1 to 9 of the present invention, the molar ratio (O/Si) of oxygen (O) atoms to silicon (Si) atoms satisfied a specific range. Thus, the lithium secondary batteries manufactured using the same were significantly enhanced in performance in terms of discharge capacity, initial efficiency, and capacity retention rate as compared with the lithium secondary batteries of Comparative Examples 1 to 4.

Specifically, the lithium secondary batteries of Examples 1 to 7 using the silicon-carbon composite having a molar ratio (O/Si) of oxygen (O) atoms to silicon (Si) atoms of 0.03 to 0.44 had a discharge capacity of 1,621 mAh/g to 1,923 mAh/g, an initial efficiency of 83.6% to 92.5%, and a capacity retention rate of 85% or more in most cases, indicating that the performance of the lithium secondary batteries was overall excellent.

Meanwhile, when the lithium secondary battery of Comparative Example 1 in which only etching was not carried out in the process of Example 1 is compared, the secondary battery of Example 1 had a discharge capacity of 1,849 mAh/g, an initial efficiency of 84.8%, and a capacity retention rate of 85.3%, whereas the lithium secondary battery of Comparative Example 1 had a discharge capacity of 1,542 mAh/g and an initial efficiency of 74.8%, indicating that the latter was significantly reduced in the discharge capacity and initial efficiency as compared with the former of Example 1. This is understood as a result of the fact that in the lithium secondary battery of Comparative Example 1, etching was not carried out in the preparation of the silicon-carbon composite, so that an excessive amount of $SiO_2$, an irreversible substance, remained.

In addition, when the secondary battery of Example 1 in which the molar ratio (O/Si) of oxygen (O) atoms to silicon (Si) atoms was 0.44 and the secondary batteries of Comparative Examples 2 to 4 in which the molar ratio (O/Si) of oxygen (O) atoms to silicon (Si) atoms was 0.48 to 0.76 are compared, the secondary battery of Example 1 had an initial efficiency of 84.8% and a capacity retention rate of 85.3%, whereas the lithium secondary batteries of Comparative Examples 2 to 4 had an initial efficiency of 79.8% or lower and a capacity retention rate of 78 or lower, indicating significantly reduced performance as compared with the lithium secondary battery of Example 1. In addition, the lithium secondary batteries of Comparative Example 4 had a discharge capacity of 1,553 mAh/g, which was significantly reduced as compared with the lithium secondary batteries of the Examples.

In particular, in the silicon-carbon composites of Comparative Examples 2 to 4, a large number of pores were present in the composites even after a carbon layer was formed, which increased the BET of the composites, and some side reactions with the electrolyte occurred, so that the capacity retention rate of the lithium secondary batteries decreased as compared with the lithium secondary batteries of the Examples.

In addition, when the molar ratio (O/Si) of oxygen (O) atoms to silicon (Si) atoms was less than 0.01, the preparation of a silicon-carbon composite was difficult.

Meanwhile, in Table 4 above, the silicon-carbon composites (2) of Examples 8 and 9, each comprising two carbon layers comprising a first carbon layer and a second carbon layer, were composites in which the second carbon layer was formed by spray drying on the first carbon layer of the silicon-carbon composites of Examples 2 and 4, respectively. As double carbon layers were formed, the strength of the shell layer was further increased, and the bonding (adhesion) between the silicon-carbon composite and the binder was increased, thereby reducing the electrode expansion rate. As a result, the capacity retention rate of a lithium secondary battery was enhanced after 100 cycles.

Accordingly, the performance of a lithium secondary battery can be uniformly enhanced by controlling the molar ratio (O/Si) of oxygen (O) atoms to silicon (Si) atoms in the silicon-carbon composite. Further, the secondary battery characteristics can be controlled by changing the shell structure of the silicon-carbon composite.

[Reference Numerals of the Drawings]

10: pore (void)
20: silicon particle
40: carbon layer (first carbon layer)
45: carbon
50: carbon layer (second carbon layer)

(1) Chemical thermal decomposition deposition method
(2) Liquid coating method

**Claims**

1.   A silicon-carbon composite, which comprises silicon particles and carbon, wherein the molar ratio (O/Si) of oxygen (O) atoms to silicon (Si) atoms in the silicon-carbon composite is 0.01 to 0.45.

2.   The silicon-carbon composite of claim 1, wherein the silicon-carbon composite has a core-shell structure, the core comprises silicon particles and carbon, and the shell comprises a carbon layer.

3.   The silicon-carbon composite of claim 1, wherein the silicon-carbon composite comprises pores inside thereof, and the porosity of the silicon-carbon composite is 10% or less.

4.   The silicon-carbon composite of claim 2, wherein the shell comprises a first carbon layer comprising at least one selected from the group consisting of amorphous carbon, crystalline carbon, carbon nanofibers, chemical vapor graphene, reduced graphene oxide, and carbon nanotubes.

5. The silicon-carbon composite of claim 2, wherein the shell comprises two or more carbon layers comprising a first carbon layer and a second carbon layer,

the first carbon layer comprises at least one selected from the group consisting of amorphous carbon, crystalline carbon, carbon nanofibers, chemical vapor graphene, and carbon nanotubes, and
the second carbon layer comprises reduced graphene oxide.

6. The silicon-carbon composite of claim 1, wherein the content of oxygen (O) in the silicon-carbon composite is 0.5% by weight to 10% by weight, the content of silicon (Si) is 38% by weight to 80% by weight, and the content of carbon (C) is 18% by weight to 60% by weight, based on the total weight of the silicon-carbon composite.

7. The silicon-carbon composite of claim 2, wherein the content of carbon (C) inside the core of the silicon-carbon composite is 16% by weight to 45% by weight based on the total weight of the silicon-carbon composite.

8. The silicon-carbon composite of claim 5, wherein the content of oxygen (O) in the reduced graphene oxide in the second carbon layer is 0.5% by weight to 10% by weight based on the total weight of the reduced graphene oxide.

9. The silicon-carbon composite of claim 5, wherein, in a Raman spectrum obtained by Raman spectroscopy of the silicon-carbon composite, when the intensity of the 2D band peak appearing in the range of $2{,}600 \text{ cm}^{-1}$ to $2{,}760 \text{ cm}^{-1}$ is I2D, the intensity of the G band peak appearing in the range of $1{,}500 \text{ cm}^{-1}$ to $1{,}660 \text{ cm}^{-1}$ is IG, and the intensity of the D band peak appearing in the range of $1{,}280 \text{ cm}^{-1}$ to $1{,}400 \text{ cm}^{-1}$ is ID, the following Relationship 4 is satisfied:

[Relationship 4]

$$0.5 < (\text{I2D} + \text{IG}) / \text{ID} \leq 2.0$$

10. The silicon-carbon composite of claim 1, wherein the silicon-carbon composite further comprises silicon oxide ($SiO_x$, $0.4 \leq x \leq 2$).

11. A method for preparing the silicon-carbon composite of claim 1, which comprises:

a first step of etching a silicon-based raw material powder using an etching solution containing a fluorine (F) atom-containing compound;
a second step of filtering and drying the product obtained by the etching to prepare a silicon composite; and
a third step of coating carbon inside the silicon composite, or coating carbon inside the silicon composite and forming a carbon layer on the surface thereof, using a chemical thermal decomposition deposition method to obtain a silicon-carbon composite.

12. The method for preparing the silicon-carbon composite according to claim 11, wherein the third step comprises forming carbon in the core and the first carbon layer in the shell by injecting at least one selected from a compound represented by the following Formulae 1 to 3 and carrying out a reaction in a gaseous state at 400°C to 1,200°C:

[Formula 1]        $C_N H_{(2N + 2-A)}[OH]_A$

in Formula 1, N is an integer of 1 to 20, and A is 0 or 1,

[Formula 2]        $C_N H_{(2N-B)}$

in Formula 2, N is an integer of 2 to 6, and B is an integer of 0 to 2,

[Formula 3]        $C_x H_y O_z$

in Formula 3, x is an integer of 1 to 20, y is an integer of 0 to 25, and z is an integer of 0 to 5.

13. The method for preparing the silicon-carbon composite according to claim 12, which further comprises a fourth step of forming a second carbon layer on the first carbon layer using a liquid coating method after forming the first carbon layer.

14. A negative electrode active material, which comprises the silicon-carbon composite of claim 1.

15. A lithium secondary battery, which comprises the negative electrode active material of claim 14.

[Fig. 1]

[Fig. 2]

[Fig. 3]

[Fig. 4]

[Fig. 5]

[Fig. 6]

[Fig. 7]

## INTERNATIONAL SEARCH REPORT

| | International application No. |
|---|---|
| | **PCT/KR2023/002332** |

**A.    CLASSIFICATION OF SUBJECT MATTER**

**C01B 33/02**(2006.01)i; **C01B 33/113**(2006.01)i; **C01B 33/021**(2006.01)i; **C01B 32/182**(2017.01)i; **C01B 32/198**(2017.01)i; **C01B 32/158**(2017.01)i; **C01B 32/20**(2017.01)i; **H01M 4/133**(2010.01)i; **H01M 4/583**(2010.01)i; **H01M 10/052**(2010.01)i

According to International Patent Classification (IPC) or to both national classification and IPC

**B.    FIELDS SEARCHED**

Minimum documentation searched (classification system followed by classification symbols)

C01B 33/02(2006.01); C01B 32/05(2017.01); H01M 10/052(2010.01); H01M 4/134(2010.01); H01M 4/36(2006.01); H01M 4/583(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 규소(silicon), 탄소(carbon), 산소(oxygen), 몰비(mol ratio), 식각(etching), 불소(fluorine), 코팅(coating), 기공(pore), 코어쉘(core shell), 음극 활물질(anode active material)

**C.    DOCUMENTS CONSIDERED TO BE RELEVANT**

| Category* | Citation of document, with indication, where appropriate, of the relevant passages | Relevant to claim No. |
|---|---|---|
| X | KR 10-1981609 B1 (LG CHEM, LTD.) 24 May 2019 (2019-05-24) See claims 1, 9 and 21; and paragraphs [0048]-[0052], [0066], [0067], [0073]-[0077] and [0089]. | 1,3,6,10,14,15 |
| Y | | 2,4,5,7-9,11-13 |
| Y | KR 10-1396521 B1 (KNU-INDUSTRY COOPERATION FOUNDATION) 22 May 2014 (2014-05-22) See claims 1, 9, 13, 17, 20, 25 and 28; and paragraphs [0043], [0090], [0093]-[0101], [0103] and [0124]. | 2,4,5,7-9,11-13 |
| Y | JP 2020-527283 A (IMERYS GRAPHITE & CARBON SWITZERLAND LTD.) 03 September 2020 (2020-09-03) See claims 1, 2 and 11. | 11-13 |
| A | KR 10-2019-0013457 A (UNIST(ULSAN NATIONAL INSTITUTE OF SCIENCE AND TECHNOLOGY)) 11 February 2019 (2019-02-11) See entire document. | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2023** | **15 May 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/002332**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2015-0026925 A (LG CHEM, LTD. et al.) 11 March 2015 (2015-03-11)<br>See entire document. | 1-15 |

Form PCT/ISA/210 (second sheet) (July 2022)

<table>
<tr><td colspan="2" align="center">**INTERNATIONAL SEARCH REPORT**<br>Information on patent family members</td><td colspan="2">International application No.<br><br>**PCT/KR2023/002332**</td></tr>
</table>

| Patent document<br>cited in search report | Publication date<br>(day/month/year) | Patent family member(s) | | Publication date<br>(day/month/year) |
|---|---|---|---|---|
| KR 10-1981609 B1 | 24 May 2019 | CN 107636867 | A | 26 January 2018 |
| | | CN 107636867 | B | 02 April 2021 |
| | | EP 3355389 | A1 | 01 August 2018 |
| | | EP 3355389 | A4 | 01 August 2018 |
| | | EP 3355389 | B1 | 30 December 2020 |
| | | JP 2018-523898 | A | 23 August 2018 |
| | | JP 6727667 | B2 | 22 July 2020 |
| | | KR 10-2017-0036381 | A | 03 April 2017 |
| | | PL 3355389 | T3 | 17 May 2021 |
| | | US 2018-0151874 | A1 | 31 May 2018 |
| | | US 2022-0255069 | A1 | 11 August 2022 |
| | | WO 2017-052281 | A1 | 30 March 2017 |
| KR 10-1396521 B1 | 22 May 2014 | KR 10-2013-0016727 | A | 18 February 2013 |
| JP 2020-527283 A | 03 September 2020 | CN 110998926 | A | 10 April 2020 |
| | | EP 3656008 | A1 | 27 May 2020 |
| | | EP 3656008 | B1 | 15 June 2022 |
| | | ES 2926173 | T3 | 24 October 2022 |
| | | HU E059804 | T2 | 28 December 2022 |
| | | KR 10-2020-0033266 | A | 27 March 2020 |
| | | PL 3656008 | T3 | 07 November 2022 |
| | | US 2020-0148545 | A1 | 14 May 2020 |
| | | WO 2019-016395 | A1 | 24 January 2019 |
| KR 10-2019-0013457 A | 11 February 2019 | KR 10-2139736 | B1 | 31 July 2020 |
| | | US 10985370 | B2 | 20 April 2021 |
| | | US 2019-0036121 | A1 | 31 January 2019 |
| | | US 2021-0202944 | A1 | 01 July 2021 |
| KR 10-2015-0026925 A | 11 March 2015 | CN 105189352 | A | 23 December 2015 |
| | | CN 105189352 | B | 01 December 2017 |
| | | EP 2873646 | A1 | 20 May 2015 |
| | | EP 2873646 | B1 | 03 April 2019 |
| | | JP 2016-508114 | A | 17 March 2016 |
| | | JP 6037052 | B2 | 30 November 2016 |
| | | KR 10-1636143 | B1 | 04 July 2016 |
| | | PL 2873646 | T3 | 30 August 2019 |
| | | TW 201522220 | A | 16 June 2015 |
| | | TW I583624 | B | 21 May 2017 |
| | | US 2015-0072240 | A1 | 12 March 2015 |
| | | US 9947922 | B2 | 17 April 2018 |
| | | WO 2015-030531 | A1 | 05 March 2015 |

Form PCT/ISA/210 (patent family annex) (July 2022)

**EP 4 480 913 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4393610 B

- JP 2016502253 A